# EUROPEAN PATENT APPLICATION

(11) **EP 4 485 183 A1**
(43) Date of publication of application: **01.01.2025**
(21) Application number: 23795194.2
(22) Date of filing: 20.04.2023
(51) Int. Cl.: G06F 9/4401

(54) **PERIPHERAL CONTROL METHOD, AND ELECTRONIC DEVICE AND SYSTEM**

(30) Priority: 28.04.2022 CN 202210461245
(71) Applicant: Huawei Technologies Co., Ltd., Shenzhen, Guangdong 518129 (CN)
(72) Inventor: ZHANG, Chuang, Shenzhen, Guangdong 518129 (CN); LI, Gang, Shenzhen, Guangdong 518129 (CN); ZHANG, Bin, Shenzhen, Guangdong 518129 (CN)
(74) Representative: Pfenning, Meinig & Partner mbB
(86) International application number: PCT/CN2023/089592
(87) International publication number: WO 2023/207761

(57) **Abstract**

This application provides a peripheral control method, an electronic device, and a system, and relates to the field of terminal technologies. In this application, the electronic device can create, based on obtained peripheral information, a peripheral agent corresponding to another electronic device, and share a peripheral with the another electronic device by using the peripheral agent, to improve peripheral control efficiency. This improves user experience. The method includes: After obtaining peripheral information of one or more second electronic devices, a first electronic device creates, based on the peripheral information, a peripheral agent corresponding to a peripheral of the one or more second electronic devices. The first electronic device receives, by using a first distributed input subsystem, an input event sent by a second distributed input subsystem of a target second electronic device, where the input event is an event determined after the target second electronic device collects a user input operation by using a peripheral. After processing the input event by using a target peripheral agent corresponding to the target second electronic device, the first electronic device performs a corresponding target operation.

## Description

This application claims priority to Chinese Patent Application No. 202210461245.9, filed with the China National Intellectual Property Administration on April 28, 2022 and entitled "PERIPHERAL CONTROL METHOD, ELECTRONIC DEVICE, AND SYSTEM", which is incorporated herein by reference in its entirety.

### TECHNICAL FIELD

Embodiments of this application relate to the field of terminal technologies, and in particular, to a peripheral control method, an electronic device, and a system.

### BACKGROUND

With development of terminal technologies, electronic device forms are increasingly diversified, for example, include a plurality of forms such as a mobile phone, a tablet computer, and a laptop computer. In daily life or office work, users may use electronic devices in various forms. For example, in a process of editing a document by using a laptop computer, the tablet computer is used to search for data, and a photo in a mobile phone needs to be inserted into the document that is being edited. A process in which a user operates peripherals of a plurality of electronic devices to operate the plurality of electronic devices is cumbersome. In addition, the peripherals (such as keyboards and mouses) of the plurality of electronic devices are all placed on a desk, and occupy space on the desk, and the desk is prone to be disordered.

Therefore, a developer proposes a method for controlling a plurality of electronic devices by using a set of peripherals. For example, a mouse configured with a Logitech^{®} flow (flow) function may control the plurality of electronic devices as a cursor moves, and support data transmission between the plurality of electronic devices. However, the Logitech^{®} flow function depends on corresponding software and Logitech^{®} peripheral hardware. For another example, the plurality of electronic devices may share a set of keyboard and mouse by installing Synergy^{®} (Synergy^{®}) software. However, this method also depends on dedicated software, and a pure software application layer solution has high latency in use, and is prone to a frame freezing exception. For another example, two electronic devices are connected through a copy line, to share a set of keyboard and mouse. However, this method supports keyboard and mouse sharing between only two electronic devices, and depends on dedicated hardware.

It can be learned that there is a serious limitation on use of a current peripheral control method, which affects user experience.

### SUMMARY

To resolve the foregoing technical problems, embodiments of this application provide a peripheral control method, an electronic device, and a system. According to technical solutions provided in embodiments of this application, the electronic device can create, based on obtained peripheral information, a peripheral agent corresponding to another electronic device, and share a peripheral with the another electronic device by using the peripheral agent. This resolves a problem that a serious limitation on use of a peripheral control method affects user experience.

In addition, the peripheral agent is used, so that any electronic device that does not depend on dedicated software or hardware can share the peripheral with the another electronic device. This improves peripheral control efficiency.

To achieve the foregoing technical objective, embodiments of this application provide the following technical solutions.

According to a first aspect, a peripheral control method is provided. The method includes: A first electronic device obtains peripheral information of one or more second electronic devices. The first electronic device creates, based on the peripheral information, a peripheral agent corresponding to a peripheral of the one or more second electronic devices. The first electronic device receives, by using a first distributed input subsystem, an input event sent by a second distributed input subsystem of a target second electronic device in the one or more second electronic devices, where the input event is an event determined after the target second electronic device collects a user input operation by using a peripheral. The first electronic device processes the input event by using a target peripheral agent corresponding to the target second electronic device. The first electronic device performs a target operation corresponding to the input event.

In some embodiments, the first distributed input subsystem is located at an application framework layer of the first electronic device, and the second distributed input subsystem is located at an application framework layer of the target second electronic device.

In this way, electronic devices in a communication system synchronize peripheral information and create a corresponding peripheral agent at a kernel layer, to implement cross-device invocation of peripherals of the electronic devices. This resolves a problem that a serious limitation on use of a peripheral control method affects user experience.

According to any one of the first aspect or the implementations of the first aspect, that the first electronic device creates, based on the peripheral information, the peripheral agent corresponding to the peripheral of the one or more second electronic devices includes: The first electronic device creates, at a kernel layer based on the peripheral information, the peripheral agent corresponding to the peripheral of the one or more second electronic devices.

According to the first aspect, that the first electronic device processes the input event by using the target peripheral agent corresponding to the target second electronic device includes: The target peripheral agent in the first electronic device receives the input event forwarded by the first distributed input subsystem. The target peripheral agent in the first electronic device sends the input event to the first input subsystem. The first input subsystem is a subsystem that is located at a same layer as the first distributed input subsystem in an operating system of the first electronic device, or the first input subsystem and the first distributed input subsystem are a same subsystem. After identifying a first application in which an input focus is located, the first input subsystem of the first electronic device sends the input event to the first application. Alternatively, after determining, according to a preset rule, a second application corresponding to the input event, the first input subsystem of the first electronic device starts the second application, and sends the input event to the second application.

In this way, the first electronic device reuses an existing logical framework of an input event software processing process to a maximum extent, that is, the input event is uploaded by using the peripheral agent at the kernel layer to the input subsystem at the application framework layer, then the input subsystem completes identification and distribution of the input event, and an application at the application layer performs the corresponding operation. In this way, a requirement of a user for cross-device peripheral invocation is met, and system development difficulty is reduced.

According to any one of the first aspect or the implementations of the first aspect, the first electronic device stores a first key combination configuration trustlist of the one or more second electronic devices, and the first key combination configuration trustlist indicates whether a received key combination input event takes effect in the one or more second electronic devices.

According to any one of the first aspect or the implementations of the first aspect, that the first electronic device processes the input event by using the target peripheral agent corresponding to the target second electronic device; and the first electronic device performs the target operation corresponding to the input event includes: The target peripheral agent in the first electronic device sends the input event to the first input subsystem. The first electronic device determines, by using the first input subsystem, that the input event is a key combination input event. The first electronic device determines, by using the first input subsystem, whether key combination input information in the key combination input event is in the first key combination configuration trustlist. If the key combination input information is not in the first key combination configuration trustlist, the first electronic device performs the target operation.

According to any one of the first aspect or the implementations of the first aspect, the method further includes: The first electronic device sends a second key combination configuration trustlist of the first electronic device to the one or more second electronic devices, where the second key combination configuration trustlist indicates whether a key combination input event takes effect in the first electronic device.

In this way, a key combination trustlist of each electronic device is transmitted between the electronic devices, so that a key combination is more suitable for a cross-device peripheral control scenario. This meets a use requirement of the user, reduces operation difficulty of the user, and improves user experience.

According to any one of the first aspect or the implementations of the first aspect, that the first electronic device obtains the peripheral information of the one or more second electronic devices includes: The first electronic device obtains the peripheral information of the one or more second electronic devices from a distributed database. Alternatively, the first electronic device receives a broadcast message sent by the one or more second electronic devices, where the broadcast message carries the peripheral information. Alternatively, the first electronic device downloads the peripheral information of the one or more second electronic devices from a cloud server. Alternatively, the first electronic device receives the peripheral information of the one or more second electronic devices that is sent by a central node of a communication system, where the communication system includes the first electronic device and the one or more second electronic devices.

In this way, synchronization of the peripheral information of the electronic devices is flexibly implemented in a plurality of manners. In this way, the first electronic device can create a peripheral agent or use a peripheral agent based on latest peripheral information, to avoid a failure of cross-device peripheral invocation. This improves user experience.

According to any one of the first aspect or the implementations of the first aspect, after the first electronic device creates, based on the peripheral information, the peripheral agent corresponding to the peripheral of the one or more second electronic devices, the method further includes: The first electronic device initializes an event injection thread and an event transmission thread, where the event injection thread is configured to inject the received input event into the corresponding peripheral agent, and the event transmission thread is configured to receive the input event.

In this way, the first electronic device and the second electronic device complete initialization of corresponding threads, and subsequently, the first electronic device can invoke the peripheral of the second electronic device across devices based on a user indication. In addition, the second electronic device may also send a corresponding input event to the first electronic device based on the input event received by the peripheral. Therefore, the first electronic device is controlled by using the peripheral of the second electronic device.

According to any one of the first aspect or the implementations of the first aspect, the method further includes: The first electronic device disconnects a communication connection to the target second electronic device. The first electronic device deletes the target peripheral agent.

In this way, the first electronic device updates a corresponding peripheral agent in real time based on a device connection state, to avoid a failure of cross-device peripheral invocation. This improves user experience.

According to any one of the first aspect or the implementations of the first aspect, the peripheral includes one or more of a keyboard, a mouse, and a touchpad.

According to a second aspect, a peripheral control method is provided. The method includes: A second electronic device obtains peripheral information of a first electronic device. The second electronic device creates, based on the peripheral information, a peripheral agent corresponding to the first electronic device. The second electronic device determines, in response to an operation of a user on a peripheral, an input event forwarded to the first electronic device, where the input event indicates the first electronic device to perform a target operation. The second electronic device sends the input event to a first distributed input subsystem of the first electronic device by using a second distributed input subsystem.

According to the second aspect, the second electronic device stores a first key combination configuration trustlist, and the first key combination configuration trustlist indicates whether a key combination input event takes effect in the second electronic device.

According to any one of the second aspect or the implementations of the second aspect, that the second electronic device sends the input event to the first distributed input subsystem of the first electronic device by using the second distributed input subsystem includes: A second input subsystem of the second electronic device determines that the input event is a key combination input event. If the second input subsystem of the second electronic device determines that key combination input information in the key combination input event is not in the first key combination configuration trustlist, the second electronic device sends the input event to the first distributed input subsystem of the first electronic device by using the second distributed input subsystem, where the second input subsystem is a subsystem that is located at a same layer as the second distributed input subsystem in an operating system of the second electronic device, or the second input subsystem and the second distributed input subsystem are a same subsystem.

According to any one of the second aspect or the implementations of the second aspect, the method further includes: The second electronic device sends the first key combination configuration trustlist to the first electronic device.

According to any one of the second aspect or the implementations of the second aspect, that the second electronic device obtains the peripheral information of the first electronic device includes: The second electronic device obtains the peripheral information of the first electronic device from a distributed database. Alternatively, the second electronic device receives a broadcast message sent by the first electronic device, where the broadcast message carries the peripheral information. Alternatively, the second electronic device downloads the peripheral information of the first electronic device from a cloud server. Alternatively, the second electronic device receives the peripheral information of the first electronic device that is sent by a central node of a communication system.

According to any one of the second aspect or the implementations of the second aspect, after that the second electronic device creates, based on the peripheral information, the peripheral agent corresponding to the first electronic device, the method further includes: The second electronic device initializes an event collection thread and an event transmission thread, where the event collection thread is configured to collect the input event by using the peripheral, and the event transmission thread is configured to send the input event.

According to any one of the second aspect or the implementations of the second aspect, the method further includes: The second electronic device disconnects a communication connection to the first electronic device. The second electronic device deletes the peripheral agent corresponding to the first electronic device.

According to any one of the second aspect or the implementations of the second aspect, the first distributed input subsystem is located at an application framework layer of the first electronic device, and the second distributed input subsystem is located at an application framework layer of a target second electronic device.

According to any one of the second aspect or the implementations of the second aspect, the peripheral includes one or more of a keyboard, a mouse, and a touchpad.

For technical effects corresponding to any one of the second aspect or the implementations of the second aspect, refer to technical effects corresponding to any one of the first aspect or the implementations of the first aspect. Details are not described herein again.

According to a third aspect, an electronic device is provided. The electronic device is a first electronic device, and includes a processor and a memory. The memory is coupled to the processor, the memory is configured to store computer-readable instructions, and when the processor reads the computer-readable instructions from the memory, the first electronic device is enabled to perform the following operations: The first electronic device obtains peripheral information of one or more second electronic devices. The first electronic device creates, based on the peripheral information, a peripheral agent corresponding to a peripheral of the one or more second electronic devices. Then, the first electronic device receives, by using a first distributed input subsystem, an input event sent by a second distributed input subsystem of a target second electronic device in the one or more second electronic devices, where the input event is an event determined after the target second electronic device collects a user input operation by using a peripheral. The first electronic device processes the input event by using a target peripheral agent corresponding to the target second electronic device. The first electronic device performs a target operation corresponding to the input event.

According to the third aspect, that the first electronic device processes the input event by using the target peripheral agent corresponding to the target second electronic device includes: The target peripheral agent in the first electronic device receives the input event forwarded by the first distributed input subsystem. The target peripheral agent in the first electronic device sends the input event to a first input subsystem, where the first input subsystem is a subsystem that is located at a same layer as the first distributed input subsystem in an operating system of the first electronic device, or the first input subsystem and the first distributed input subsystem are a same subsystem. After identifying a first application in which an input focus is located, the first input subsystem of the first electronic device sends the input event to the first application. Alternatively, after determining, according to a preset rule, a second application corresponding to the input event, the first input subsystem of the first electronic device starts the second application, and sends the input event to the second application.

According to any one of the third aspect or the implementations of the third aspect, the first electronic device stores a first key combination configuration trustlist of the one or more second electronic devices, and the first key combination configuration trustlist indicates whether a received key combination input event takes effect in the one or more second electronic devices.

According to any one of the third aspect or the implementations of the third aspect, that the first electronic device processes the input event by using the target peripheral agent corresponding to the target second electronic device; and the first electronic device performs the target operation corresponding to the input event includes: The target peripheral agent in the first electronic device sends the input event to the first input subsystem. The first electronic device determines, by using the first input subsystem, that the input event is a key combination input event. The first electronic device determines, by using the first input subsystem, whether key combination input information in the key combination input event is in the first key combination configuration trustlist. If the key combination input information is not in the first key combination configuration trustlist, the first electronic device performs the target operation.

According to any one of the third aspect or the implementations of the third aspect, when the processor reads the computer-readable instructions from the memory, the electronic device is further enabled to perform the following operation: sending a second key combination configuration trustlist of the first electronic device to the one or more second electronic devices, where the second key combination configuration trustlist indicates whether a key combination input event takes effect in the first electronic device.

According to any one of the third aspect or the implementations of the third aspect, that the first electronic device obtains the peripheral information of the one or more second electronic devices includes: The first electronic device obtains the peripheral information of the one or more second electronic devices from a distributed database. Alternatively, the first electronic device receives a broadcast message sent by the one or more second electronic devices, where the broadcast message carries the peripheral information. Alternatively, the first electronic device downloads the peripheral information of the one or more second electronic devices from a cloud server. Alternatively, the first electronic device receives the peripheral information of the one or more second electronic devices that is sent by a central node of a communication system, where the communication system includes the first electronic device and the one or more second electronic devices.

According to any one of the third aspect or the implementations of the third aspect, when the processor reads the computer-readable instructions from the memory, the electronic device is further enabled to perform the following operation: initializing an event injection thread and an event transmission thread, where the event injection thread is configured to inject the received input event into the corresponding peripheral agent, and the event transmission thread is configured to receive the input event.

According to any one of the third aspect or the implementations of the third aspect, when the processor reads the computer-readable instructions from the memory, the electronic device is further enabled to perform the following operations: The first electronic device disconnects a communication connection to the target second electronic device. The first electronic device deletes the target peripheral agent.

According to any one of the third aspect or the implementations of the third aspect, that the first electronic device creates, based on the peripheral information, the peripheral agent corresponding to the peripheral of the one or more second electronic devices includes: The first electronic device creates, at a kernel layer based on the peripheral information, the peripheral agent corresponding to the peripheral of the one or more second electronic devices.

According to any one of the third aspect or the implementations of the third aspect, the first distributed input subsystem is located at an application framework layer of the first electronic device, and the second distributed input subsystem is located at an application framework layer of the target second electronic device.

According to any one of the third aspect or the implementations of the third aspect, the peripheral includes one or more of a keyboard, a mouse, and a touchpad.

For technical effects corresponding to any one of the third aspect or the implementations of the third aspect, refer to technical effects corresponding to any one of the first aspect or the implementations of the first aspect. Details are not described herein again.

According to a fourth aspect, an electronic device is provided. The electronic device is a second electronic device, and includes a processor, a memory, and a peripheral. The memory and the peripheral are coupled to the processor, the memory is configured to store computer-readable instructions, and when the processor reads the computer-readable instructions from the memory, the second electronic device is enabled to perform the following operations: The second electronic device obtains peripheral information of a first electronic device. The second electronic device creates, based on the peripheral information, a peripheral agent corresponding to the first electronic device. The second electronic device determines, in response to an operation of a user on a peripheral, an input event forwarded to the first electronic device, where the input event indicates the first electronic device to perform a target operation. The second electronic device sends the input event to a first distributed input subsystem of the first electronic device by using a second distributed input subsystem.

According to the fourth aspect, the second electronic device stores a first key combination configuration trustlist, and the first key combination configuration trustlist indicates whether a key combination input event takes effect in the second electronic device.

According to any one of the fourth aspect or the implementations of the fourth aspect, that the second electronic device sends the input event to the first distributed input subsystem of the first electronic device by using the second distributed input subsystem includes: A second input subsystem of the second electronic device determines that the input event is a key combination input event. If the second input subsystem of the second electronic device determines that key combination input information in the key combination input event is not in the first key combination configuration trustlist, the second electronic device sends the input event to the first distributed input subsystem of the first electronic device by using the second distributed input subsystem, where the second input subsystem is a subsystem that is located at a same layer as the second distributed input subsystem in an operating system of the second electronic device, or the second input subsystem and the second distributed input subsystem are a same subsystem.

According to any one of the fourth aspect or the implementations of the fourth aspect, when the processor reads the computer-readable instructions from the memory, the electronic device is further enabled to perform the following operation: The second electronic device sends the first key combination configuration trustlist to the first electronic device.

According to any one of the fourth aspect or the implementations of the fourth aspect, that the second electronic device obtains the peripheral information of the first electronic device includes: The second electronic device obtains the peripheral information of the first electronic device from a distributed database. Alternatively, the second electronic device receives a broadcast message sent by the first electronic device, where the broadcast message carries the peripheral information. Alternatively, the second electronic device downloads the peripheral information of the first electronic device from a cloud server. Alternatively, the second electronic device receives the peripheral information of the first electronic device that is sent by a central node of a communication system.

According to any one of the fourth aspect or the implementations of the fourth aspect, when the processor reads the computer-readable instructions from the memory, the electronic device is further enabled to perform the following operation: The second electronic device initializes an event collection thread and an event transmission thread, where the event collection thread is configured to collect the input event by using the peripheral, and the event transmission thread is configured to send the input event.

According to any one of the fourth aspect or the implementations of the fourth aspect, when the processor reads the computer-readable instructions from the memory, the electronic device is further enabled to perform the following operations: The second electronic device disconnects a communication connection to the first electronic device. The second electronic device deletes the peripheral agent corresponding to the first electronic device.

According to any one of the fourth aspect or the implementations of the fourth aspect, the first distributed input subsystem is located at an application framework layer of the first electronic device, and the second distributed input subsystem is located at an application framework layer of a target second electronic device.

According to any one of the fourth aspect or the implementations of the fourth aspect, the peripheral includes one or more of a keyboard, a mouse, and a touchpad.

For technical effects corresponding to any one of the fourth aspect or the implementations of the fourth aspect, refer to technical effects corresponding to any one of the second aspect or the implementations of the second aspect. Details are not described herein again.

According to a fifth aspect, a peripheral control system is provided. The peripheral control system includes the first electronic device according to any one of the first aspect or the implementations of the first aspect, and the second electronic device according to any one of the second aspect or the implementations of the second aspect.

For technical effects corresponding to any one of the fifth aspect or the implementations of the fifth aspect, refer to technical effects corresponding to any one of the first aspect or the implementations of the first aspect. Details are not described herein again.

According to a sixth aspect, an embodiment of this application provides an electronic device. The electronic device has a function of implementing the peripheral control method according to any one of the first aspect or the possible implementations of the first aspect; or the electronic device has a function of implementing the peripheral control method according to any one of the second aspect or the possible implementations of the second aspect. The function may be implemented by hardware, or may be implemented by hardware executing corresponding software. The hardware or the software includes one or more modules corresponding to the function.

For technical effects corresponding to any one of the sixth aspect or the implementations of the sixth aspect, refer to technical effects corresponding to any one of the first aspect or the implementations of the first aspect. Details are not described herein again.

According to a seventh aspect, a computer-readable storage medium is provided. The computer-readable storage medium stores a computer program (which may also be referred to as instructions or code). When the computer program is executed by an electronic device, the electronic device is enabled to perform the method according to any one of the first aspect or the implementations of the first aspect; or the electronic device is enabled to perform the method according to any one of the second aspect or the implementations of the second aspect.

For technical effects corresponding to any one of the seventh aspect or the implementations of the seventh aspect, refer to technical effects corresponding to any one of the first aspect or the implementations of the first aspect. Details are not described herein again.

According to an eighth aspect, an embodiment of this application provides a computer program product. When the computer program product runs on an electronic device, the electronic device is enabled to perform the method according to any one of the first aspect or the implementations of the first aspect; or the electronic device is enabled to perform the method according to any one of the second aspect or the implementations of the second aspect.

For technical effects corresponding to any one of the eighth aspect or the implementations of the eighth aspect, refer to technical effects corresponding to any one of the first aspect or the implementations of the first aspect. Details are not described herein again.

According to a ninth aspect, an embodiment of this application provides a circuit system. The circuit system includes a processing circuit. The processing circuit is configured to perform the method according to any one of the first aspect or the implementations of the first aspect; or the processing circuit is configured to perform the method according to any one of the second aspect or the implementations of the second aspect.

For technical effects corresponding to any one of the ninth aspect or the implementations of the ninth aspect, refer to technical effects corresponding to any one of the first aspect or the implementations of the first aspect. Details are not described herein again.

According to a tenth aspect, an embodiment of this application provides a chip system, including at least one processor and at least one interface circuit. The at least one interface circuit is configured to perform a receiving/sending function, and send instructions to the at least one processor. When the at least one processor executes the instructions, the at least one processor performs the method according to any one of the first aspect or the implementations of the first aspect; or the at least one processor performs the method according to any one of the second aspect or the implementations of the second aspect.

For technical effects corresponding to any one of the tenth aspect or the implementations of the tenth aspect, refer to technical effects corresponding to any one of the first aspect or the implementations of the first aspect. Details are not described herein again.

### BRIEF DESCRIPTION OF DRAWINGS

FIG. 1 is a diagram of a cross-device peripheral control scenario according to an embodiment of this application;
FIG. 2 is a diagram of a communication system to which a peripheral control method is applied according to an embodiment of this application;
FIG. 3 is a diagram of a hardware structure of a first electronic device or a second electronic device according to an embodiment of this application;
FIG. 4A is a block diagram 1 of a software structure of a first electronic device or a second electronic device according to an embodiment of this application;
FIG. 4B is a block diagram 2 of a software structure of a first electronic device or a second electronic device according to an embodiment of this application;
FIG. 5 is a schematic flowchart 1 of a peripheral control method according to an embodiment of this application;
FIG. 6A to FIG. 6C are a diagram 1 of module interaction in an application scenario of a peripheral control method according to an embodiment of this application;
FIG. 7A(a) to FIG. 7A(c) are an interface diagram 1 according to an embodiment of this application;
FIG. 7B is an interface diagram 2 according to an embodiment of this application;
FIG. 8A to FIG. 8D are a schematic flowchart 2 of a peripheral control method according to an embodiment of this application;
FIG. 9A and FIG. 9B are a schematic flowchart 3 of a peripheral control method according to an embodiment of this application;
FIG. 10 is a schematic flowchart 4 of a peripheral control method according to an embodiment of this application;
FIG. 11 A to FIG. 11C are a diagram 2 of module interaction in an application scenario of a peripheral control method according to an embodiment of this application;
FIG. 12 is a schematic flowchart 5 of a peripheral control method according to an embodiment of this application;
FIG. 13 is a diagram of a structure of a first electronic device according to an embodiment of this application; and
FIG. 14 is a diagram of a structure of a second electronic device according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended to describe purposes of specific embodiments, but are not intended to limit this application. The terms "one", "a", "the", "the foregoing", "this", and "the one" of singular forms used in this specification and the appended claims of this application are intended to include an expression like "one or more", unless otherwise specified in the context clearly. It should be further understood that in the following embodiments of this application, "at least one" and "one or more" mean one, two, or more.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have" and their variants all mean "include but are not limited to", unless otherwise specifically emphasized in another manner. The term "connection" includes a direct connection and an indirect connection, unless otherwise indicated. "First" and "second" are merely intended for a purpose of description, and shall not be understood as an indication or implication of relative importance or implicit indication of a quantity of indicated technical features.

In embodiments of this application, the term "example", "for example", or the like is used to give an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a relative concept in a specific manner.

In some scenarios, a user may need to operate a plurality of electronic devices in daily life or office work. If each electronic device is configured with a peripheral, the user needs to separately operate a plurality of peripherals, to control corresponding electronic devices. Operations are cumbersome, and the plurality of peripherals occupy large space, resulting in a disordered desk.

Therefore, a developer proposes a method for controlling a plurality of electronic devices by using a set of peripherals. For example, a mouse configured with a Logitech^{®} flow function may control the plurality of electronic devices by moving a cursor, and support data transmission between the plurality of electronic devices.

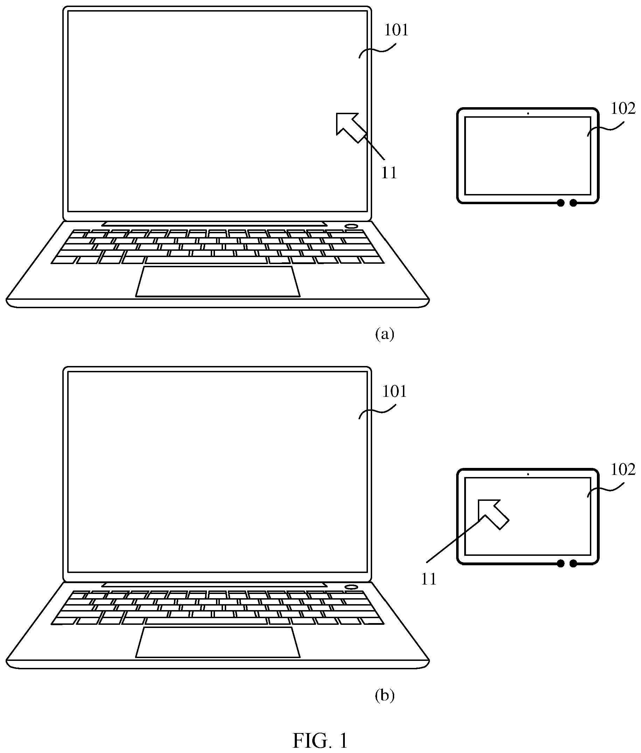

For example, as shown in (a) in FIG. 1, a laptop computer 101 detects an operation of moving, by the user, a cursor 11 to an edge location of a display, determines that there is a tablet computer 102 in a direction corresponding to the edge location of the display, and may determine that the user indicates to move a mouse to the tablet computer 102. As shown in (b) in FIG. 1, in response to the operation of moving the cursor 11 by the user, the tablet computer 102 displays the cursor 11, and the user may control the tablet computer 102 by using the mouse and a keyboard of the laptop computer 101. In addition, in response to a copying operation performed by the user on the tablet computer 102 and a pasting operation performed by the user on the laptop computer 101, the tablet computer 102 may send, to the laptop computer 101, data (such as a text, an image, or a file) stored in the tablet computer 102.

In this way, the plurality of electronic devices are controlled by using a set of keyboard and mouse devices. However, the Logitech^{®} flow function depends on corresponding software and Logitech^{®} peripheral hardware. For example, only a set of keyboard and mouse devices configured with the Logitech^{®} flow function is supported to control another electronic device, and other keyboard and mouse devices that are not configured with the Logitech^{®} flow function cannot control another electronic device. This results in a serious limitation on use of the method.

For another example, the plurality of electronic devices may share a set of keyboard and mouse by installing Synergy^{®} software. In the plurality of electronic devices, an electronic device is used as a server (server) host, and the user may control, by using a keyboard and mouse of the electronic device, one or more electronic devices that are used as client (client) hosts. For example, after the keyboard and mouse of the server host receives a user operation, a corresponding input event is uploaded to an input subsystem. After the input subsystem identifies and distributes the input event, the Synergy^{®} software at an application layer may obtain the distributed input event. Then, the server host forwards the input event to the client host by using the Synergy^{®} software, to complete cross-device keyboard and mouse input event collection for the client host.

It can be learned that this method also depends on dedicated software (Synergy^{®} software). In addition, the input event needs to be identified and distributed on the server host, and this process is time-consuming. As a result, a process in which the client host obtains the input event is long, an overall process of invoking the keyboard and mouse devices has high latency, and this is prone to a frame freezing exception. In addition, only a set of a keyboard and mouse of the server host can control the client host, and a keyboard and mouse of the client host cannot control the server host or a plurality of hosts cannot control each other by using a plurality of sets of keyboards and mouses of the plurality of hosts. This results in a serious limitation on use and affects user experience.

For another example, two electronic devices are connected to a copy line through universal serial bus (universal serial bus, USB) interfaces, and share a set of keyboard and mouse, to implement mutual data transmission. Related hardware and a related driver are configured inside the copy line. In the two electronic devices, one electronic device can control the other electronic device by using the copy line.

However, the copy line supports sharing of the keyboard and mouse between only the two electronic devices, and the method depends on the dedicated hardware (the copy line). This results in a serious limitation on use of the method.

Therefore, embodiments of this application provide a peripheral control method. An electronic device creates a distributed peripheral agent based on obtained peripheral information of each electronic device in a distributed system. In this way, a distributed agent is used, so that any electronic device that does not depend on the dedicated software or the hardware can share a peripheral with another electronic device, to improve peripheral control efficiency. This improves user experience.

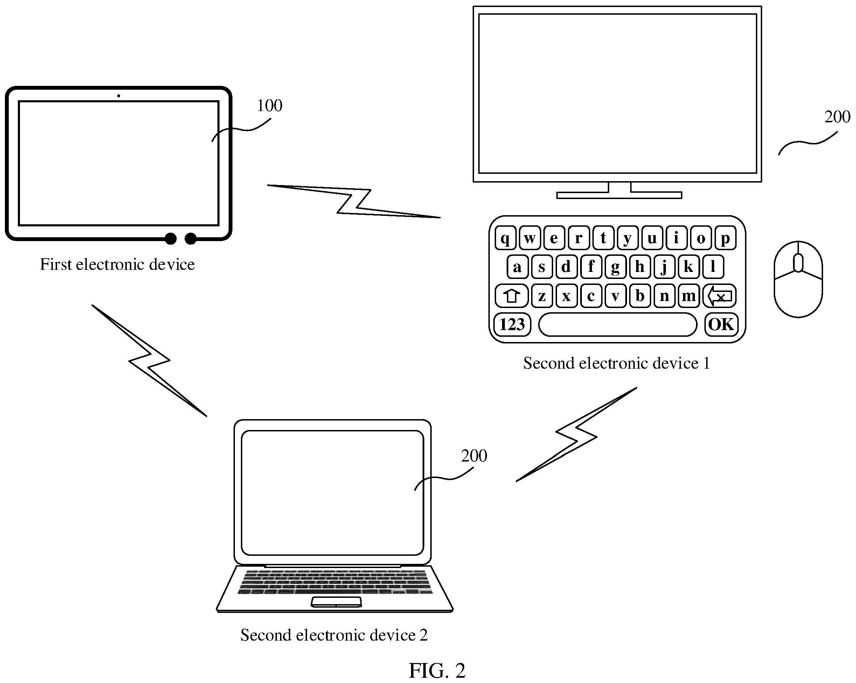

FIG. 2 is a diagram of a communication system to which a peripheral control method is applied according to an embodiment of this application. As shown in FIG. 2, the communication system includes a first electronic device 100 and a second electronic device 200. There are one or more second electronic devices 200, for example, a second electronic device 1, and a second electronic device 2 shown in FIG. 2.

In some embodiments, the first electronic device 100 may receive and respond to content input by a user by using a peripheral of the one or more second electronic devices 200. In addition, the one or more second electronic devices 200 may also receive and respond to content input by the user by using a peripheral of the first electronic device 100. Further, any one of the plurality of second electronic devices 200 may also receive and respond to content input by the user by using a peripheral of another second electronic device 200, for example, the second electronic device 1 may receive and respond to content input by the user by using a peripheral of the second electronic device 2.

Optionally, the first electronic device 100 or the second electronic device 200 may be, for example, a terminal device like a mobile phone, a tablet computer, a laptop computer, an ultra-mobile personal computer (ultra-mobile personal computer, UMPC), a netbook, a personal digital assistant (personal digital assistant, PDA), a wearable device, an artificial intelligence (artificial intelligence) device, or a head unit. An operating system installed on the first electronic device 100 or the second electronic device 200 includes but is not limited to iOS^{®}, Android^{®}, HarmonyOS^{®}, Windows^{®}, Linux^{®}, or another operating system. A specific type of the first electronic device 100 or the second electronic device 200 and the operating system installed on the first electronic device 100 or the second electronic device 200 are not limited in this application.

In some embodiments, a communication connection is established between the first electronic device 100 and the second electronic device 200, and the communication connection may be a wired connection (for example, a USB connection), or may be a wireless communication connection. A wireless communication technology for establishing a wireless communication connection includes but is not limited to at least one of the following: Bluetooth (Bluetooth, BT) (for example, conventional Bluetooth or Bluetooth low energy (Bluetooth low energy, BLE) Bluetooth), a wireless local area network (wireless local area network, WLAN) (like a wireless fidelity (wireless fidelity, Wi-Fi) network), near field wireless communication (near field communication, NFC), Zigbee (Zigbee), frequency modulation (frequency modulation, FM), and infrared (infrared, IR).

Optionally, the first electronic device 100 and the second electronic device 200 may alternatively establish a communication connection by using a third-party device in the local area network. The third-party device is, for example, a router, a gateway, a smart device controller, a server, or a wireless access point (access point, AP) device.

Optionally, the first electronic device 100 and the second electronic device 200 may alternatively communicate with each other through a distributed soft bus. It should be noted that for related content of the distributed soft bus, refer to the conventional technology. Details are not described in embodiments of this application.

In some embodiments, after the first electronic device 100 establishes the communication connection to the second electronic device 200, the first electronic device 100 may receive and respond to, through the communication connection to the second electronic device 200, the content input by the user by using the peripheral (for example, a keyboard device or a mouse device) of the second electronic device 200.

For example, both the first electronic device 100 and the second electronic device 200 support a proximity discovery function. For example, after the first electronic device 100 approaches the second electronic device 200, the first electronic device 100 and the second electronic device 200 can discover each other, and then establish a Wi-Fi peer-to-peer (peer to peer, P2P) connection, a Bluetooth connection, and/or another wireless communication connection. Then, the user can operate the first electronic device 100 by using the peripheral configured by the second electronic device 200.

For another example, the first electronic device 100 and the second electronic device 200 establish the wireless communication connection through the local area network. For example, both the first electronic device 100 and the second electronic device 200 are connected to a same router.

For another example, the first electronic device 100 and the second electronic device 200 establish the wireless communication connection through a cellular network, the Internet, or the like. For example, the second electronic device 200 accesses the Internet by using the router, and the first electronic device 100 accesses the Internet by using the cellular network. In this way, the first electronic device 100 establishes the wireless communication connection to the second electronic device 200.

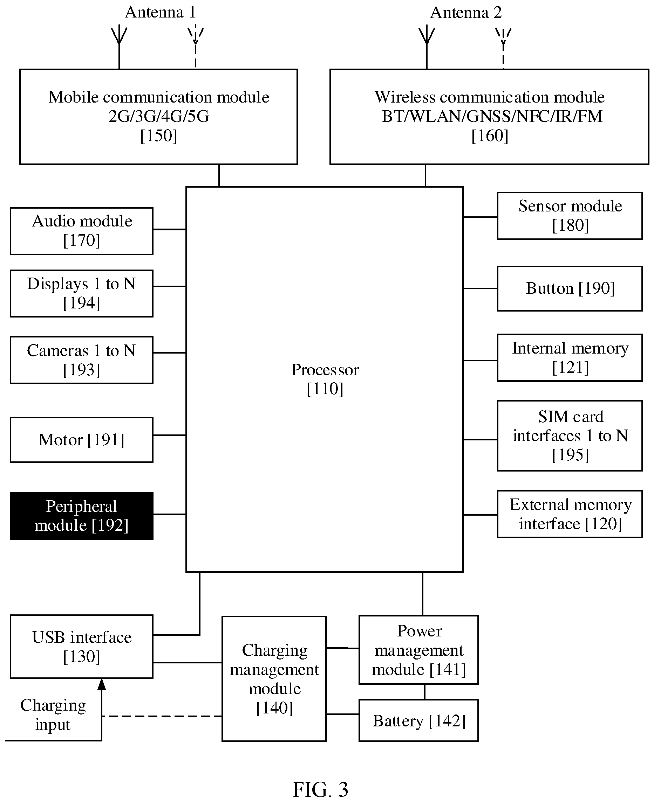

For example, FIG. 3 is a diagram of a structure of a first electronic device 100 or a second electronic device 200.

The first electronic device 100 or the second electronic device 200 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, a peripheral module 192, a camera 193, a display 194, a subscriber identity module (subscriber identity module, SIM) card interface 195, and the like.

It may be understood that the structure shown in this embodiment of this application does not constitute a specific limitation on the first electronic device 100 or the second electronic device 200. In some other embodiments of this application, the first electronic device 100 or the second electronic device 200 may include more or fewer components than those shown in the figure, or a combination of a part of the components, or splits from a part of the components, or an arrangement of different components. The components shown in the figure may be implemented by hardware, software, or a combination of software and hardware.

For example, when the first electronic device 100 is a PC, the first electronic device 100 may not include the mobile communication module 150 and the SIM card interface 195.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store the instructions or the data that have/has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor, a charger, a flash, the camera 193, and the like through different I2C bus interfaces. For example, the processor 110 may be coupled to the touch sensor through the I2C interface, so that the processor 110 communicates with the touch sensor through the I2C bus interface, to implement a touch function of the first electronic device 100 or the second electronic device 200.

The MIPI interface may be configured to connect the processor 110 and a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the first electronic device 100 or the second electronic device 200. The processor 110 communicates with the display 194 through the DSI interface, to implement a display function of the first electronic device 100 or the second electronic device 200.

The USB interface 130 is an interface that conforms to a USB standard specification, and may be specifically a mini USB interface, a micro USB interface, a USB type-C interface, or the like. The USB interface 130 may be configured to connect to a charger to charge the first electronic device 100 or the second electronic device 200, or may be configured to perform data transmission between the first electronic device 100 or the second electronic device 200 and a peripheral device, or may be configured to connect to a headset for playing an audio through the headset. The interface may be further configured to connect to another electronic device like an AR device.

It may be understood that an interface connection relationship between the modules shown in this embodiment of this application is merely an example for description, and constitutes no limitation on the structure of the first electronic device 100 or the second electronic device 200. In some other embodiments of this application, the first electronic device 100 or the second electronic device 200 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the first electronic device 100 or the second electronic device 200. The charging management module 140 supplies power to the electronic device by using the power management module 141 while charging the battery 142.

The power management module 141 is configured to connect the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the first electronic device 100 or the second electronic device 200 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the first electronic device 100 or the second electronic device 200 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the first electronic device 100 or the second electronic device 200. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal by using an audio device, or displays an image or a video on the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the first electronic device 100 or the second electronic device 200, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the first electronic device 100 or the second electronic device 200, the antenna 1 and the mobile communication module 150 are coupled, and the antenna 2 and the wireless communication module 160 are coupled, so that the first electronic device 100 or the second electronic device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The first electronic device 100 or the second electronic device 200 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, or the like. The display 194 includes a display panel. The display panel may be a liquid crystal display (liquid crystal display, LCD), for example, may be manufactured by using an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, or a quantum dot light-emitting diode (quantum dot light-emitting diode, QLED). In some embodiments, the first electronic device 100 or the second electronic device 200 may include one or N displays 194, where N is a positive integer greater than 1.

The peripheral module 192 may include a mouse, a keyboard, a touchpad configured to implement a keyboard and mouse function, and the like. In some embodiments, a peripheral agent of the second electronic device 200 is already set in the first electronic device 100, and the first electronic device 100 may use a peripheral of the second electronic device 200. In this case, after receiving content input by the user by using the peripheral module 192, the second electronic device 200 may display the content on the display of the second electronic device 200, or may display the content on the display of the first electronic device 100 that establishes a communication connection to the second electronic device 200. Optionally, the peripheral module 192 is an optional module. For example, the first electronic device 100 is a PAD, the peripheral module 192 may not be configured, and an input operation of the user is directly received by using the display 194.

The camera 193 is configured to capture a static image or a video. An optical image of an object is generated through the lens, and is projected onto a photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the first electronic device 100 or the second electronic device 200 may include one or N cameras 193, where N is a positive integer greater than 1.

The external memory interface 120 may be used to connect to an external memory card, for example, a micro SD card, to extend a storage capability of the first electronic device 100 or the second electronic device 200. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the first electronic device 100 or the second electronic device 200. In addition, the internal memory 121 may include a high-speed random access memory, or may include a non-volatile memory, for example, at least one magnetic disk storage device, a flash memory device, or a universal flash storage (universal flash storage, UFS). The processor 110 runs the instructions stored in the internal memory 121 and/or instructions stored in the memory disposed in the processor, to perform various function applications and data processing of the first electronic device 100 or the second electronic device 200.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110. The first electronic device 100 or the second electronic device 200 may implement, for example, music playing or recording through the audio module 170. The audio module 170 may include a speaker, a receiver, a microphone, a headset jack, an application processor, and the like, to implement an audio function.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The pressure sensor is configured to sense a pressure signal, and can convert the pressure signal into an electrical signal. In some embodiments, the pressure sensor may be disposed on the display 194. There are a plurality of types of pressure sensors, such as a resistive pressure sensor, an inductive pressure sensor, and a capacitive pressure sensor. The capacitive pressure sensor may include at least two parallel plates made of conductive materials. When a force acts on the pressure sensor, capacitance between electrodes changes. The first electronic device 100 or the second electronic device 200 determines pressure intensity based on the change of the capacitance. When a touch operation is performed on the display, the first electronic device 100 or the second electronic device 200 detects intensity of the touch operation by using the pressure sensor. The first electronic device 100 or the second electronic device 200 may also calculate a touch location based on a detection signal of the pressure sensor. In some embodiments, touch operations that are performed in a same touch location but have different touch operation intensity may correspond to different operation instructions. For example, when a touch operation whose touch operation intensity is less than a first pressure threshold is performed on a Messages application icon, an instruction for viewing an SMS message is performed. When a touch operation whose touch operation intensity is greater than or equal to the first pressure threshold is performed on the Message application icon, an instruction for creating a new message is performed.

The touch sensor is also referred to as a "touch component". The touch sensor may be disposed on the display 194, and the touch sensor and the display 194 form a touchscreen, which is also referred to as a "touch screen". The touch sensor is configured to detect a touch operation performed on or near the touch sensor. The touch sensor may transfer the detected touch operation to the application processor to determine a type of a touch event. A visual output related to the touch operation may be provided on the display 194. In some other embodiments, the touch sensor may alternatively be disposed on a surface of the first electronic device 100 or the second electronic device 200 at a location different from that of the display 194.

The button 190 includes a power button, a volume button, and the like. The button 190 may be a mechanical button, or may be a touch button. The first electronic device 100 or the second electronic device 200 may receive a button input, and generate a button signal input related to user setting and function control of the first electronic device 100 or the second electronic device 200.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The SIM card interface 195 is configured to connect to a SIM card. The SIM card may be inserted into the SIM card interface 195 or removed from the SIM card interface 195, to come into contact with or be separated from the first electronic device 100 or the second electronic device 200. The first electronic device 100 or the second electronic device 200 may support one or N SIM card interfaces, where N is a positive integer greater than 1.

In some scenarios, a same operating system or different operating systems may be installed on the first electronic device 100 and the second electronic device 200. The following uses the HarmonyOS^{®} as an example, to describe a software structure of an electronic device.

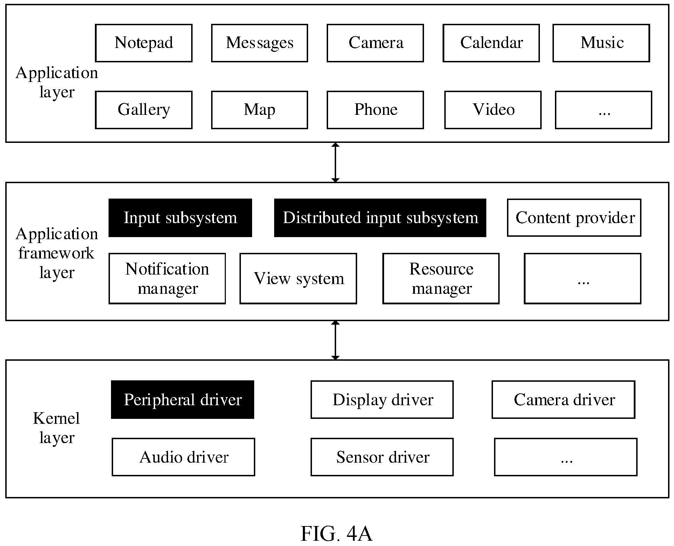

For example, it is assumed that an operating system installed on the first electronic device 100 or the second electronic device 200 is the HarmonyOS^{®}. FIG. 4A is a block diagram of a structure software of a first electronic device 100 or a second electronic device 200 according to an embodiment of this application.

A software system of the first electronic device 100 or the second electronic device 200 may use a layered architecture, an event-driven architecture, a microkernel architecture, a micro service architecture, or a cloud architecture. In this embodiment of this application, a layered architecture HarmonyOS^{®} is used as an example to describe a software structure of the first electronic device 100 or the second electronic device 200.

In a layered architecture, software is divided into several layers, and each layer has a clear role and task. The layers communicate with each other through a software interface. In some embodiments, the HarmonyOS^{®} is divided into three layers, namely, an application layer, an application framework layer, and a kernel layer from top to bottom.

The application layer may include a series of application packages.

As shown in FIG. 4A, the application packages may include applications such as Notepad, Messages, Camera, Calendar, Music, Gallery, Map, Phone, and Video.

The application framework layer provides an application programming interface (application programming interface, API) and a programming framework for an application at the application layer. The application framework layer includes some predefined functions.

As shown in FIG. 4A, the application framework layer may include an input subsystem, a distributed input subsystem, a content provider, a notification manager, a view system, a resource manager, and the like.

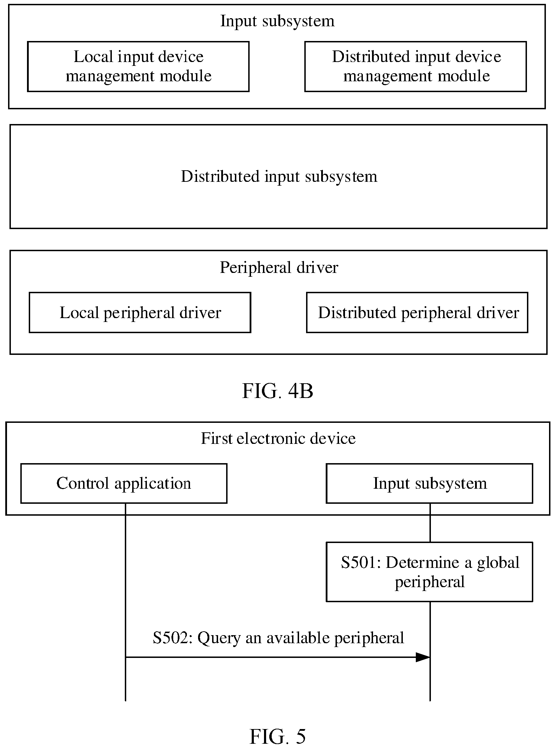

For example, as shown in FIG. 4B, the input subsystem includes a local input device management module and a distributed input device management module. The local input device management module is configured to manage an input device (a peripheral) configured by a local device, for example, a keyboard or a mouse. The distributed input device management module is configured to manage an input device of another electronic device in a communication system.

The distributed input subsystem is configured to: synchronize with peripheral information of the another electronic device in the communication system, create a peripheral agent of the another electronic device, receive an input event of a peripheral of the another electronic device, and implement cross-device peripheral management and invoking.

The content provider is configured to: store and obtain data, and enable the data to be accessed by an application. The data may include a video, an image, an audio, calls that are made and answered, a browsing history and bookmarks, an address book, and the like.

The notification manager enables an application to display notification information in a status bar, and may be configured to convey a notification message, which may automatically disappear after a short pause without requiring a user interaction. For example, the notification manager is configured to: notify download completion, give a message notification, and the like. The notification manager may alternatively be a notification that appears in a top status bar of the system in a form of graph or scroll bar text, for example, a notification of an application that is run on a background, or may be a notification that appears on the screen in a form of dialog window. For example, text information is prompted in the status bar, an alert sound is played, the electronic device vibrates, or the indicator light blinks.

The view system includes visual controls such as a control for displaying a text and a control for displaying a picture. The view system may be configured to construct an application. A display interface may include one or more views. For example, a display interface including a notification icon of Messages may include a view for displaying a text and a view for displaying an image.

The resource manager provides various resources such as a localized character string, an icon, an image, a layout file, and a video file for an application.

The kernel layer is a layer between hardware and software. The kernel layer includes a peripheral driver, a display driver, a camera driver, an audio driver, a sensor driver, and the like.

For example, as shown in FIG. 4B, the peripheral driver includes a local peripheral driver and a distributed peripheral driver. The local peripheral driver is configured to manage a local peripheral. The distributed peripheral driver is configured to manage the peripheral agent that is of the another electronic device in the communication system and that is created by the distributed input subsystem.

For example, the electronic device (for example, the first electronic device 100 and/or the second electronic device 200) may create, at the kernel layer, the peripheral agent corresponding to the another electronic device in the communication system. After receiving the input event detected by the peripheral of the another electronic device, the distributed input subsystem at the application framework layer injects the input event into the peripheral agent corresponding to the another electronic device, and completes upload of the input event to a corresponding application at the application layer by using the corresponding peripheral agent. In this way, the electronic device can reuse an existing logical framework (that is, in a sequence of the kernel layer, the application framework layer, and the application layer, send the input event to an upper layer for processing) to a maximum extent in a software processing process of a peripheral input event, to meet a requirement of a user for cross-device peripheral invocation and reduce system development difficulty.

In addition, the application layer of the electronic device may not need to distinguish whether an obtained peripheral input is from the peripheral of the electronic device or the peripheral of the another electronic device, but may directly indicate, based on the received peripheral input, the electronic device to perform a corresponding operation.

Optionally, after the electronic device creates a peripheral agent, the application at the application layer can identify the peripheral agent (that is, enable a peripheral whose peripheral agent is created to be visible to the application layer), to select a corresponding peripheral agent for use. Alternatively, the electronic device may display, on the display in a plurality of manners such as using a control, a peripheral whose peripheral agent is created, so that the user can select a to-be-used peripheral.

The following describes in detail the peripheral control method provided in embodiments of this application by using an example in which the first electronic device 100 is a first electronic device and the second electronic devices 200 include the second electronic device 1 and the second electronic device 2.

For example, FIG. 5 is a schematic flowchart of a peripheral control method according to an embodiment of this application. As shown in FIG. 5, the method includes the following steps.

S501: The first electronic device determines a global peripheral.

In some embodiments, after accessing a communication system, the first electronic device may synchronize with peripheral information of each second electronic device in the communication system by using an input subsystem, and create or update an agent node of a peripheral of the second electronic device, so that the first electronic device can subsequently receive and respond to content input by a user by using the peripheral of the second electronic device.

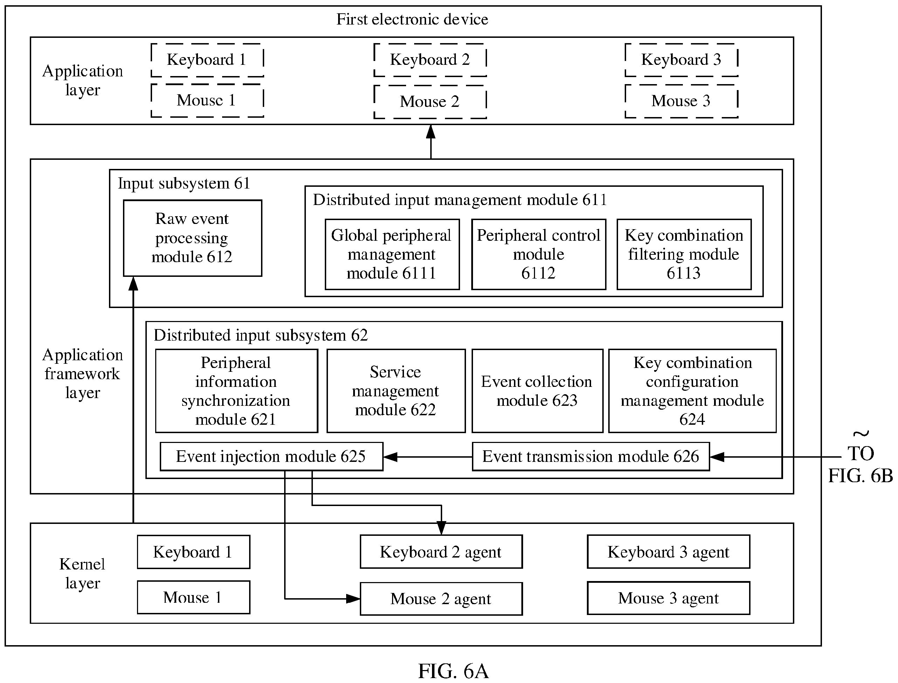

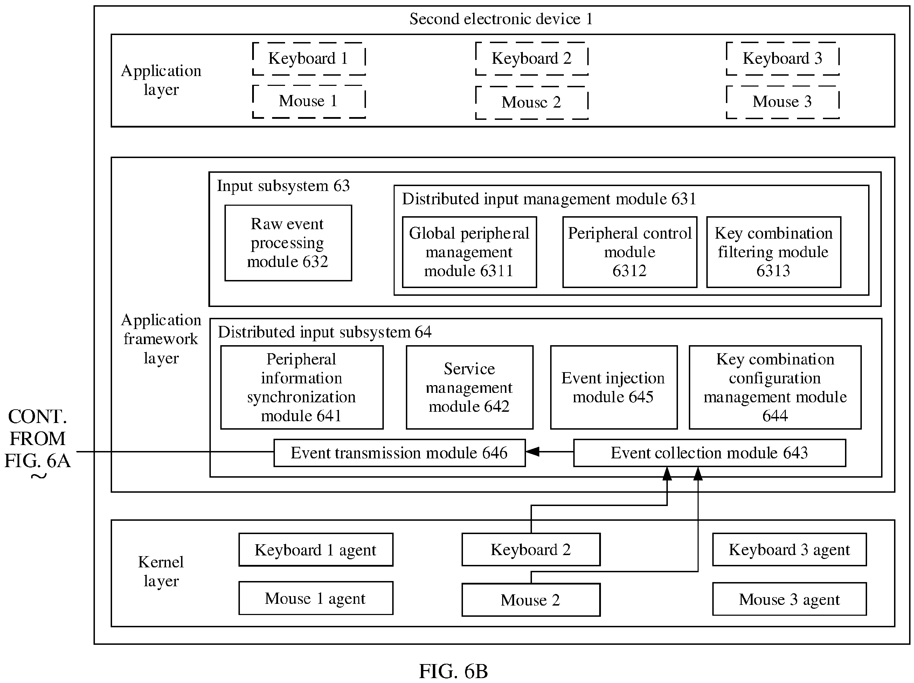

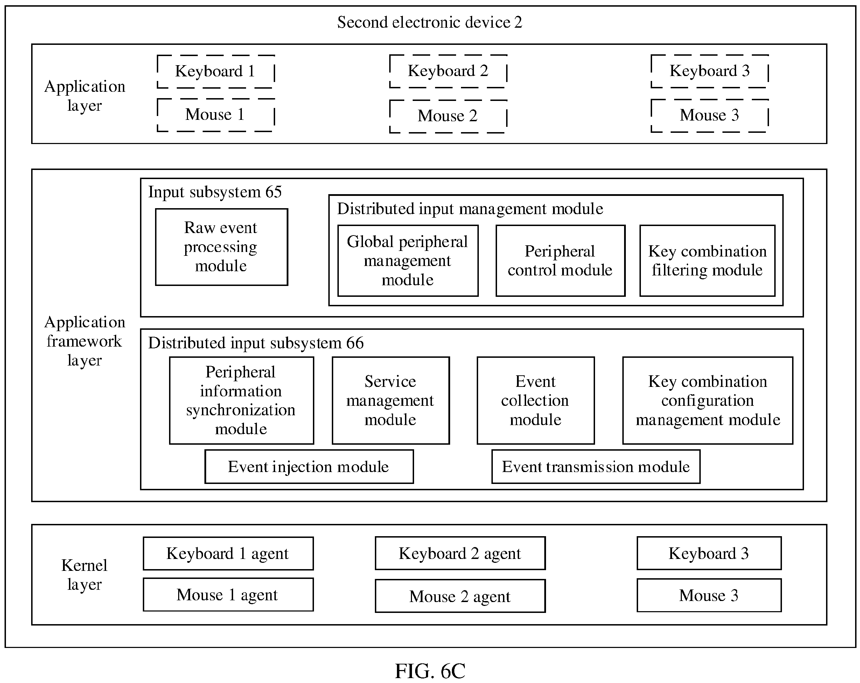

For example, as shown in FIG. 6A to FIG. 6C, the first electronic device, the second electronic device 1, and the second electronic device 2 establish a communication connection, the first electronic device is configured with a keyboard 1 and a mouse 1, the second electronic device 1 is configured with a keyboard 2 and a mouse 2, and the second electronic device 3 is configured with a keyboard 3 and a mouse 3. A distributed input subsystem at an application framework layer of each electronic device includes a peripheral information synchronization module configured to synchronize peripheral information. For example, a distributed input subsystem 62 of the first electronic device includes a peripheral information synchronization module 621, which can obtain peripheral information of the second electronic device 1 and the second electronic device 2.

Optionally, the peripheral information synchronization module writes the found peripheral information into a distributed database, and the distributed database synchronizes peripheral information of all the electronic devices, so that all the electronic devices obtain the same peripheral information. In a scenario shown in FIG. 6A to FIG. 6C, the distributed database stores same peripheral information of the first electronic device, the second electronic device 1, and the second electronic device 2.

Alternatively, an electronic device sends, in a manner like a broadcast manner, peripheral information of a peripheral configured by the electronic device to another electronic device in a communication system. After receiving the peripheral information, the another electronic device synchronously updates stored peripheral information, to implement synchronization of peripheral information in the communication system.

Alternatively, an electronic device uploads peripheral information of a peripheral configured by the electronic device to a cloud server, and the cloud server synchronously updates obtained peripheral information of a plurality of electronic devices. Then, another electronic device in a communication system downloads the peripheral information from the cloud server, to implement synchronization of peripheral information in the communication system. Alternatively, the cloud server delivers the synchronized peripheral information to the electronic device in the communication system based on a preset period, to implement synchronization of the peripheral information in the communication system.

Alternatively, the plurality of electronic devices in the communication system elect a central node based on a preset election mechanism, and synchronize the peripheral information by using the central node. Optionally, the central node is, for example, an electronic device that can maintain communication in the communication system, an electronic device with a strong computing capability, or a non-battery device (a device that can ensure working duration). The electronic devices in the communication system exchange information, and elect, as a central node, an electronic device that meets some or all of the foregoing conditions. For example, the central node is a router. Optionally, if the central node is powered off, the electronic devices in the communication system can re-elect a central node used to synchronize the peripheral information. For a method for electing the central node in the communication system, refer to the conventional technology. This is not specifically limited in embodiments of this application. Then, after obtaining the peripheral information broadcast or reported by each electronic device in the communication system, the central node synchronously updates all the peripheral information. The electronic device may obtain the peripheral information of the another electronic device from the central node, to implement synchronization of the peripheral information in the communication system.

It should be noted that division of modules at the application framework layer in the electronic device shown in FIG. 6A to FIG. 6C is used to describe functions that can be implemented at the application framework layer, and does not constitute a limitation on division of functional modules at the application framework layer. In some other embodiments of this application, the application framework layer may include more or fewer modules than those shown in the figure, or a combination of a part of the modules, or splits from a part of the modules, or an arrangement of different modules. For example, the input subsystem and the distributed input subsystem may form a module, configured to implement functions of the input subsystem and the distributed input subsystem. This is not described below.

In some embodiments, after obtaining the peripheral information, the electronic device synchronizes the peripheral information with a peripheral agent at a kernel layer. For example, it is determined whether a corresponding peripheral agent is created at a local kernel layer. If the corresponding peripheral agent is not created, the corresponding peripheral agent may be created based on the peripheral information. For another example, if the peripheral information does not include an existing peripheral agent, the corresponding peripheral agent may be deleted.

For example, as shown in FIG. 6A to FIG. 6C, the input subsystem at the application framework layer of the electronic device includes a distributed input management module, and the distributed input management module includes a global peripheral management module configured to manage one or more peripheral agents of the another electronic device in the communication system. The global peripheral management module is further configured to create, at the kernel layer, a peripheral agent that can be identified by an upper-layer application.

As shown in FIG. 6A to FIG. 6C, a global peripheral management module 6111 in the first electronic device receives peripheral information (such as a peripheral specification) sent by the peripheral information synchronization module 621. Then, the global peripheral management module 6111 creates, at a kernel layer based on the obtained peripheral information, a keyboard 2 agent and a mouse 2 agent that correspond to the second electronic device 1, and a keyboard 3 agent and a mouse 3 agent that correspond to the second electronic device 2.

Optionally, as shown in FIG. 6A to FIG. 6C, the distributed input subsystem 62 of the first electronic device further includes a service management module 622. The service management module 622 may also obtain the peripheral information sent by the peripheral information synchronization module 621, create the corresponding peripheral agent at the local kernel layer based on the peripheral information, use the peripheral agent as mapping of a peripheral of the another electronic device, and send information of the created peripheral agent to the global peripheral management module 6111.

Optionally, different operating systems have different manners of creating a peripheral agent. A Linux^{®} system is used as an example. In header files "uinput.h" and "input-event-codes.h", an input-related parameter and interface definition are defined, to create a keyboard agent. Specific code is as follows:

```
         struct uinput_setup usetup;
            int fd = open("/dev/uinput", O_WRONLY | O_NONBLOCK);
            ioctl(fd, UI_SET_EVBIT, EV KEY);
            ioctl(fd, UI SET KEYBIT, KEY SPACE);
            ... ...
            memset(&usetup, 0, sizeof(usetup));
            usetup.id.bustype = BUS_VIRTUAL;
            usetup.id.vendor = 0x1234; /* sample vendor */
            usetup.id.product = 0x5678; /* sample product */
            strcpy(usetup.name, name.c_str());
            ioctl(fd, UI_DEV_SETUP, &usetup);
            ioctl(fd, UI_DEV_CREATE);
```

In some embodiments, after the electronic device disconnects from the another electronic device in the communication system, the another electronic device may delete the peripheral agent corresponding to the electronic device. The Linux^{®} system is still used as an example. Code for deleting the peripheral agent is as follows:
ioctl(fd, UI_DEV_DESTROY);

It should be noted that the foregoing takes the Linux^{®} system as an example, to describe the code for creating and deleting the peripheral agent. For code for creating and deleting a peripheral agent in another operating system, refer to the foregoing code. This is not specifically limited in embodiments of this application.

In some embodiments, a corresponding mapping relationship may be established, in a preset mapping manner, between the peripheral agent created at the kernel layer and a peripheral actually configured by the electronic device in the communication system. There are one or more preset mapping manners. Subsequently, after receiving input events sent by different peripherals, the electronic device injects the input events into corresponding peripheral agents based on mapping relationships, to control the electronic device by using the peripheral agent corresponding to the peripheral of the another electronic device.

For example, a peripheral agent created by the electronic device locally is mapped to a peripheral of the another electronic device in a one-to-one manner. For example, as shown in FIG. 6A to FIG. 6C, the keyboard 2 agent corresponding to the keyboard 2 of the second electronic device 1, the mouse 2 agent corresponding to the mouse 2 of the second electronic device 1, the keyboard 3 agent corresponding to the keyboard 3 of the second electronic device 2, and the mouse 3 agent corresponding to the mouse 3 of the second electronic device 2 are created at the kernel layer of the first electronic device.

For another example, the electronic device locally creates a peripheral agent corresponding to all peripherals of an electronic device, and similarly, creates a corresponding quantity of peripheral agents based on a quantity of other electronic devices in the communication system. For example, the second electronic device 1 is configured with the keyboard 2 and the mouse 2, and after obtaining the peripheral information of the second electronic device 1, the first electronic device creates a peripheral agent corresponding to the second electronic device 1, where the peripheral agent corresponds to the keyboard 2 and the mouse 2. After receiving an input event, the keyboard 2 and the mouse 2 of the second electronic device 1 input the input event into the corresponding peripheral agent in the first electronic device.

For another example, the electronic device locally creates a peripheral agent corresponding to all peripherals of all other electronic devices in the communication system. The electronic device receives, by using the peripheral agent, an input event received by the peripheral of another electronic device, and performs a corresponding operation.

S502: The first electronic device queries an available peripheral.

In some embodiments, after the first electronic device determines the global peripheral, an upper-layer service (for example, a control application) may choose, as required, to enable or disable a function of using a peripheral of a specified device as a local peripheral.

Optionally, the control application is an application that needs to use a peripheral or can implement a peripheral search function and that is at an application layer in the electronic device, for example, a Super terminal application, a computer manager application, a Notepad application, and a Messages application. For example, the first electronic device searches for and displays an available peripheral and/or electronic device near the first electronic device in response to an operation of searching for a device by the user in the Super terminal application. For another example, the first electronic device displays a Notepad application interface, and displays a cursor in an input box. In this case, the first electronic device may query the available peripheral, configured to receive display content input by the user.

For example, as shown in FIG. 6A to FIG. 6C, a peripheral control module 6112 in the distributed input management module 611 in the input subsystem 61 of the first electronic device is configured to provide a peripheral for the upper-layer application. For example, an application at the application layer may determine that peripherals that can be used locally include the keyboard 1, a mouse 1, the keyboard 2, the mouse 2, the keyboard 3, and the mouse 3.

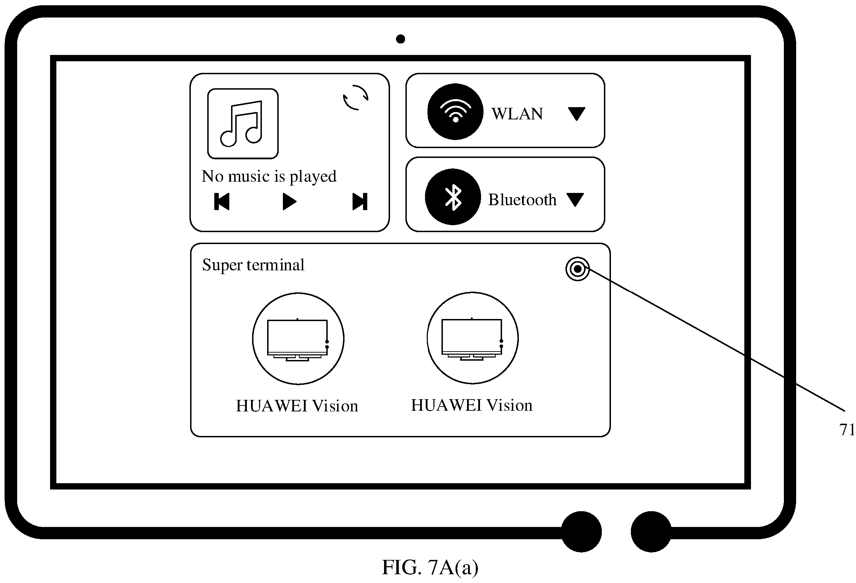

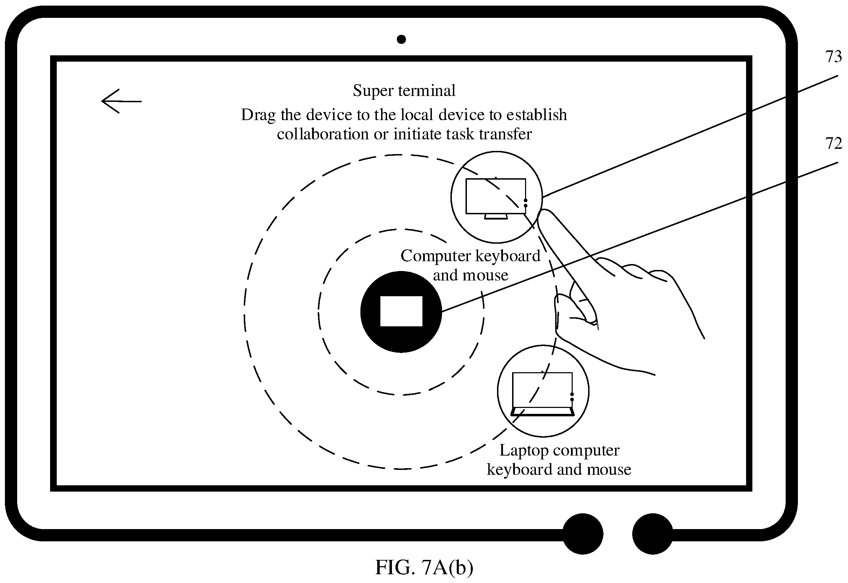

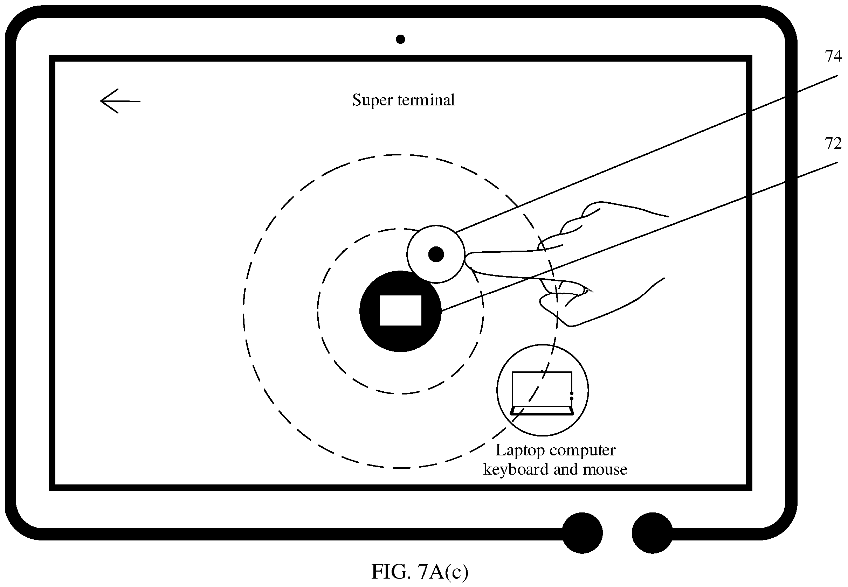

For example, as shown in FIG. 7A(a), the first electronic device (for example, a tablet computer) detects an operation of tapping, by the user, a device search control 71 that is in the Super terminal application and that is displayed in a drop-down notification bar, and determines that an operation of indicating, by the user, to query the available peripheral is received, and may search for a nearby electronic device peripheral. As shown in FIG. 7A(b), a control 72 is an icon used to represent the first electronic device, and an icon of a found electronic device peripheral and/or an icon of a found electronic device are/is displayed around the control 72, for example, a control 73 is an icon used to represent a computer keyboard and mouse located near the first electronic device, to query the available peripheral of the first electronic device.

Optionally, the peripheral found by the first electronic device is a peripheral whose corresponding peripheral agent is created locally. In other words, the first electronic device first performs step S501, to determine the global peripheral and create the corresponding peripheral agent. Then, the first electronic device performs step S502, to determine the available peripheral based on the created peripheral agent.

Alternatively, after the first electronic device finds an electronic device that is located nearby and that is configured with a peripheral, an icon of the electronic device may be directly displayed. Then, in response to an operation (for example, an operation of dragging the icon of the electronic device to the icon of the first electronic device) performed by the user on the icon of the electronic device, the first electronic device may create a peripheral agent corresponding to the electronic device, and determine that the peripheral of the electronic device is an available peripheral. In other words, the first electronic device may first perform step S502, to search for a nearby available peripheral (including an electronic device that can be connected and that is configured with a peripheral). Then, the first electronic device performs step S501. A process of synchronizing global peripheral information includes: in response to the user operation, creating the peripheral agent corresponding to the available peripheral selected by the user.

Optionally, peripherals of the electronic device may be found by another electronic device as a whole, and/or different peripherals of the electronic device may be separately found by the another electronic device.

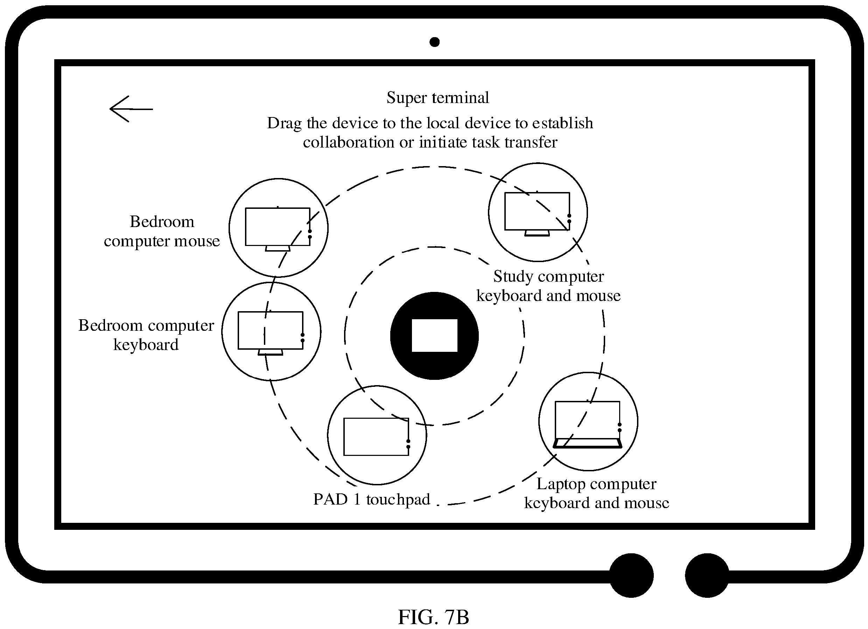

For example, as shown in FIG. 7A(a) to FIG. 7A(c), available peripherals found by the first electronic device includes the computer keyboard and mouse (that is, includes a keyboard and a mouse of a computer). Alternatively, as shown in FIG. 7B, available peripherals found by the first electronic device may include a study computer keyboard and mouse, a bedroom computer mouse, a bedroom computer keyboard, a PAD 1 touchpad, and a laptop computer keyboard and mouse. The user may select an available peripheral as required.

It should be noted that, in an example scenario in FIG. 7B, an electronic device name may be a device name set by the user (for example, a device name set by the user based on a location of the electronic device). Alternatively, in a process of establishing a connection to another electronic device, the first electronic device may determine location information of the another electronic device, to generate a corresponding device name, so as to facilitate distinguishing by the user. For this process, refer to the conventional technology. This is not specifically described in embodiments of this application.

For another example, in a scenario shown in FIG. 1, the laptop computer 101 queries, in response to an operation of moving, by the user, the cursor 11 to an edge of a display of the laptop computer 101 by using a touchpad of the laptop computer 101, the first electronic device (for example, the tablet computer 102) located in an edge direction of the display, and sends a peripheral use indication to the first electronic device. After receiving the peripheral use indication, the first electronic device determines that a peripheral of the laptop computer 101 is an available peripheral (for example, determines that a peripheral agent corresponding to the laptop computer 101 is locally created; or determines, after creating, based on the peripheral use indication, a peripheral agent corresponding to the peripheral of the laptop computer 101, that the peripheral is an available peripheral). In this way, the cursor 11 is displayed on a display of the first electronic device, and subsequently, the user may control the first electronic device by using the peripheral of the laptop computer 101.

In this way, the electronic devices in the communication system synchronize the peripheral information and create the corresponding peripheral agent at the kernel layer, to implement cross-device invocation of the peripherals of the electronic devices.

The following uses an example in which the first electronic device invokes the peripheral of the second electronic device 1, to describe in detail a thread initialization process in a cross-device peripheral invocation process.

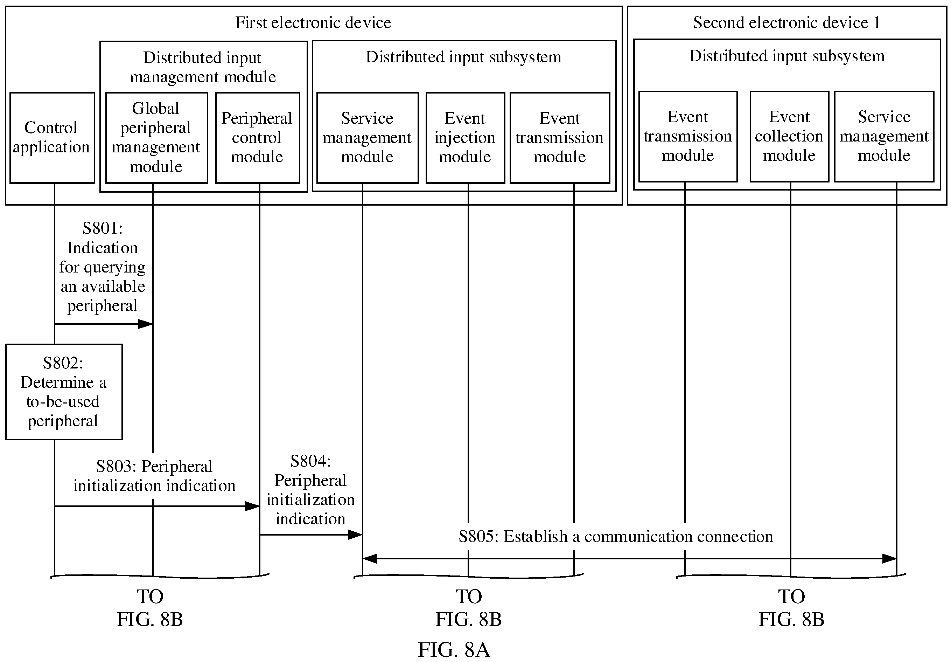

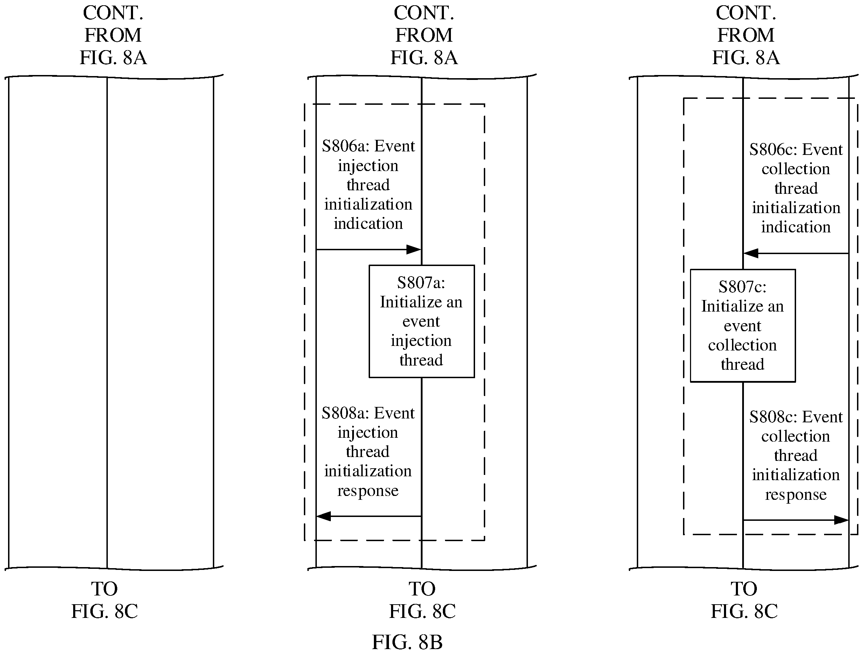

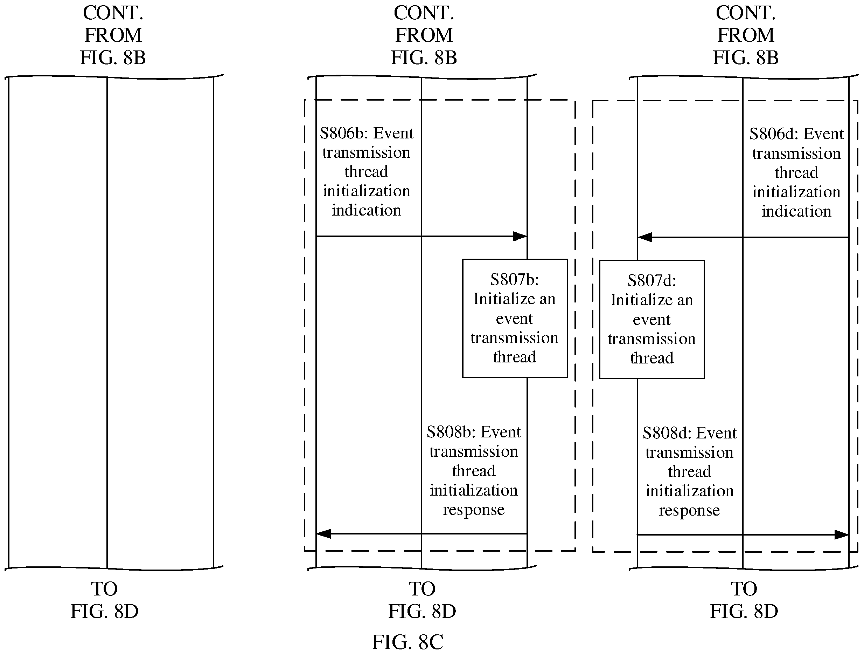

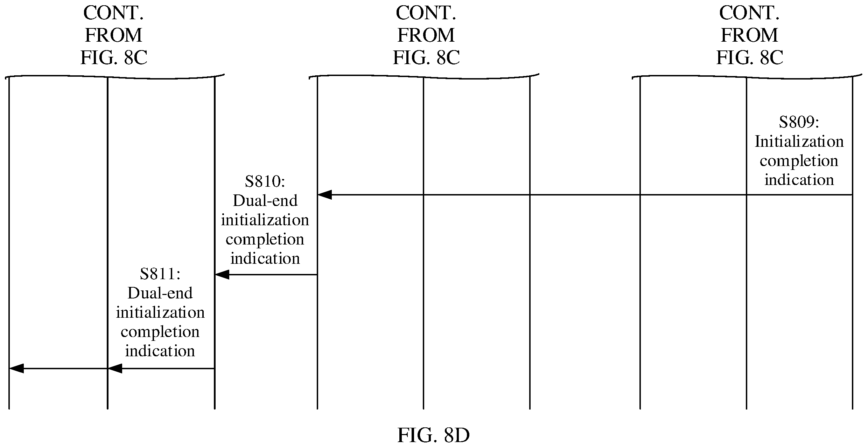

For example, FIG. 8A to FIG. 8D are a schematic flowchart of another peripheral control method according to an embodiment of this application. As shown in FIG. 8A to FIG. 8D, the method includes the following steps.

S801: A control application in the first electronic device sends, to a global peripheral management module in the first electronic device, an indication for querying an available peripheral.

In some embodiments, in response to a user operation, the control application in the first electronic device queries the available peripheral by using the global peripheral management module. Optionally, available peripherals include a peripheral of the first electronic device and a peripheral of another electronic device in a communication system.

For example, in the scenario shown in FIG. 1, the control application is a computer manager application. After receiving, by using the computer manager application, a peripheral use indication sent by the laptop computer 101, the tablet computer 102 (the first electronic device) queries the available peripheral by using the global peripheral management module, that is, determines whether a peripheral of the laptop computer 101 is the available peripheral.

For another example, in a scenario shown in FIG. 7A(a) to FIG. 7A(c), the control application is the Super terminal application. As shown in FIG. 7A(a), in response to an operation of tapping the device search control 71 in the Super terminal application by a user, the first electronic device (the tablet computer) queries the available peripheral by using the global peripheral management module.

Optionally, for remaining content in step S801, refer to related content in step S502. Details are not described herein again.

S802: The control application in the first electronic device determines a to-be-used peripheral.

In some embodiments, the first electronic device determines the to-be-used peripheral in response to a user operation; or the first electronic device finds an available peripheral and determines the available peripheral as the to-be-used peripheral.

For example, corresponding to the scenario shown in FIG. 7A(a) to FIG. 7A(c), as shown in FIG. 7A(b), after detecting an operation of dragging, by the user, the control 73 to move to the control 72, the first electronic device (for example, the tablet computer) determines that the user indicates to establish a communication connection to a computer keyboard and mouse, and determines that the to-be-used peripheral is the computer keyboard and mouse. As shown in FIG. 7A(c), a computer keyboard and mouse icon displayed on the tablet computer changes to content shown by a control 74, to prompt the user with information indicating that the communication connection is established between the tablet computer and the computer keyboard and mouse.

For another example, in the scenario shown in FIG. 1, the first electronic device detects an operation of moving, by the user, a cursor to an edge of a display by using a touchpad of the laptop computer 101, queries an available peripheral located in a direction corresponding to the edge, and determines that the user indicates to use a peripheral in the direction, that is, the peripheral in the direction is the to-be-used peripheral. Optionally, there are a plurality of available peripherals in the direction corresponding to the edge, and the first electronic device may prompt, in a manner of displaying prompt information in a pop-up window, the user to select one of the to-be-used peripherals.

S803: The control application in the first electronic device sends a peripheral initialization indication to a peripheral control module in the first electronic device.

In some embodiments, after determining the to-be-used peripheral, the first electronic device initializes a thread corresponding to a module that needs to be used in the cross-device peripheral invocation process.

For example, as shown in FIG. 6A to FIG. 6C, the distributed input management module 611 in the input subsystem 61 of the first electronic device includes the peripheral control module 6112 configured to control a peripheral. After determining the to-be-used peripheral, the control application may send an initialization indication to the peripheral control module 6112, which indicates the peripheral control module 6112 to forward the initialization indication to a corresponding module.

S804: The peripheral control module in the first electronic device forwards the peripheral initialization indication to a service management module in the first electronic device.

In some embodiments, as shown in FIG. 6A to FIG. 6C, the distributed input subsystem 62 of the first electronic device includes the service management module 622. The service management module 622 is configured to provide another module with an invoking capability of a distributed peripheral agent. After receiving the peripheral initialization indication sent by the control application, the peripheral control module 6112 forwards the peripheral initialization indication to a related module by using the service management module 622.

In some embodiments, for example, the to-be-used peripheral determined by the first electronic device in step S802 is a peripheral of the second electronic device 1. The peripheral initialization indication sent by the peripheral control module in the first electronic device to the service management module includes an identifier of the second electronic device 1, where the identifier indicates the second electronic device 1 or indicates the peripheral of the second electronic device 1.

S805: The first electronic device and the second electronic device 1 establish a communication connection by using the service management module.

In some embodiments, after receiving the peripheral initialization indication, the service management module in the first electronic device may determine that the to-be-used peripheral is the peripheral of the second electronic device 1, and then establish the communication connection to the second electronic device 1.

Optionally, the service management module determines, based on the identifier of the second electronic device 1 in the peripheral initialization indication, that the to-be-used peripheral is the peripheral of the second electronic device 1, and determines to establish the communication connection to the second electronic device 1.

In some embodiments, after determining to establish the communication connection to the second electronic device 1, the first electronic device may send, by using the service management module, a thread initialization indication to the module that needs to be used in the cross-device peripheral invocation process, which indicates each module to initialize a corresponding thread.

S806a: The service management module in the first electronic device sends an event injection thread initialization indication to an event injection module in the first electronic device.

S807a: The event injection module in the first electronic device initializes an event injection thread.

S808a: The event injection module in the first electronic device sends an event injection thread initialization response to the service management module in the first electronic device.

In some embodiments, in step S806a to step S808a, as shown in FIG. 6A to FIG. 6C, the distributed input subsystem 62 of the first electronic device further includes an event injection module 625. The event injection module 625 is configured to inject, into a corresponding peripheral agent (for example, a peripheral agent corresponding to the second electronic device 1), a received input event sent by the peripheral of the another electronic device, so that the first electronic device can perform an operation corresponding to the input event.

Therefore, in the cross-device peripheral invocation process, the first electronic device needs to use the event injection module, and the service management module sends the event injection thread initialization indication to the event injection module. Correspondingly, the event injection module initializes the event injection thread based on the received event injection thread initialization indication. In addition, after initialization is completed, the event injection thread initialization response is sent to the service management module, and is used to notify the service management module that the event injection thread is initialized.

S806b: The service management module in the first electronic device sends an event transmission thread initialization indication to an event transmission module in the first electronic device.

S807b: The event transmission module in the first electronic device initializes an event transmission thread.

S808b: The event transmission module in the first electronic device sends an event transmission thread initialization response to the service management module in the first electronic device.

In some embodiments, in step S806b to step S808b, as shown in FIG. 6A to FIG. 6C, the distributed input subsystem 62 of the first electronic device further includes an event transmission module 626. The event transmission module 626 is configured to provide an input event cross-device transmission function, for example, including functions such as encoding, sending, receiving, and decoding of the input event.

Therefore, in the cross-device peripheral invocation process, the first electronic device needs to use the event transmission module, and the service management module sends the event transmission thread initialization indication to the event transmission module. Correspondingly, the event transmission module initializes the event transmission thread based on the received event transmission thread initialization indication. In addition, after initialization is completed, the event transmission thread initialization response is sent to the service management module, and is used to notify the service management module that the event transmission thread is initialized.

S806c: A service management module in the second electronic device 1 sends an event collection thread initialization indication to an event collection module in the second electronic device 1.

S807c: The event collection module in the second electronic device 1 initializes an event collection thread.

S808c: The event collection module in the second electronic device 1 sends an event collection thread initialization response to the service management module in the second electronic device 1.

In some embodiments, in step S806c to step S808c, as shown in FIG. 6A to FIG. 6C, a distributed input subsystem 64 of the second electronic device 1 further includes an event collection module 643. The event collection module 643 is configured to obtain an input event from a peripheral connected to a local device. For example, the event collection module 643 obtains an input event sent by the keyboard 2 and the mouse 2.

Therefore, in the cross-device peripheral invocation process, the second electronic device 1 needs to use the event collection module, and the service management module in the second electronic device 1 sends the event collection thread initialization indication to the event collection module. Correspondingly, the event collection module initializes the event collection thread based on the received event collection thread initialization indication. In addition, after initialization is completed, the event collection thread initialization response is sent to the service management module, and is used to notify the service management module that the event collection thread is initialized.

S806d: The service management module in the second electronic device 1 sends an event transmission thread initialization indication to an event transmission module in the second electronic device 1.

S807d: The event transmission module in the second electronic device 1 initializes an event transmission thread.

S808d: The event transmission module in the second electronic device 1 sends an event transmission thread initialization response to the service management module in the second electronic device 1.

In some embodiments, in step S806d to step S808d, as shown in FIG. 6A to FIG. 6C, the distributed input subsystem 64 of the second electronic device 1 also includes an event transmission module 646. After obtaining the input event sent by the keyboard 2 and the mouse 2, the event collection module 643 sends the input event to the first electronic device by using the event transmission module 646.

Therefore, in the cross-device peripheral invocation process, the second electronic device 1 needs to use the event transmission module, and the service management module in the second electronic device 1 sends the event transmission thread initialization indication to the event transmission module. Correspondingly, the event transmission module initializes the event transmission thread based on the received event transmission thread initialization indication. In addition, after initialization is completed, the event transmission thread initialization response is sent to the service management module, and is used to notify the service management module that the event transmission thread is initialized.

It should be noted that an initialization sequence of the threads is not limited in embodiments of this application, that is, an execution sequence of step S806a to step S808a, step S806b to step S808b, step S806c to step S808c, and step S806d to step S808d is not limited. After obtaining the initialization indication, the service management modules in the first electronic device and the second electronic device 1 initialize the corresponding threads according to a preset rule.

In addition, the service management module may not be used in the thread initialization process. For example, an initialization process of a related module is directly completed based on interaction between the peripheral control module in the electronic device and the related module.

S809: The second electronic device 1 sends an initialization completion indication to the first electronic device by using the service management module.

In some embodiments, after determining that initialization of a to-be-used thread in the cross-device peripheral invocation process is completed, the second electronic device 1 may send the initialization completion indication to the first electronic device by using the service management module, and initialization completion indication is used to notify the first electronic device that the current related thread is initialized and cross-device peripheral invocation can be implemented.

S810: The service management module in the first electronic device sends a dual-end initialization completion indication to the peripheral control module in the first electronic device.

In some embodiments, the service management module in the first electronic device may determine, based on the event injection thread initialization response received in step S808a, that the event injection thread is initialized. In addition, it may be determined, based on the event transmission thread initialization response received in step S808b, that the event transmission thread is initialized. Further, it is determined that a thread that needs to be used in a local cross-device peripheral invocation process is initialized.

In addition, the service management module in the first electronic device may determine, based on the initialization completion indication received in step S809, that a thread that needs to be used in a cross-device peripheral invocation process at a peer end (the second electronic device 1) is initialized.

In this case, the service management module may determine that, in the cross-device peripheral invocation process, threads that need to be used at two ends are initialized, and may send the dual-end initialization completion indication to the peripheral control module.

S811: The peripheral control module in the first electronic device forwards the dual-end initialization completion indication to a global control management module and the control application in the first electronic device.

In some embodiments, after receiving the initialization completion indication, the peripheral control module in the first electronic device may forward the dual-end initialization completion indication to the global control management module and the control application. The global peripheral management module may determine, based on the dual-end initialization completion indication, that a use status of a corresponding peripheral agent is an available state. The control application may determine, based on the dual-end initialization completion indication, that a corresponding peripheral can be used.

Optionally, the control application may prompt, in a manner of displaying prompt information in a pop-up window, the user with information indicating that the corresponding peripheral can be used.

It should be noted that, in the initialization process shown in FIG. 8A to FIG. 8D, specific time needs to be consumed because a plurality of threads need to be initialized. Therefore, before determining to use the peripheral of the another electronic device across devices, the first electronic device needs to complete the initialization process. In this way, subsequently, in response to a user operation or in response to an indication of the control application, the another electronic device can quickly respond to an input that is input by the user by using a peripheral, and send an input event to the first electronic device, to ensure user experience.

In this way, the first electronic device and the second electronic device 1 complete initialization of corresponding threads, and subsequently, the first electronic device can invoke the peripheral of the second electronic device 1 across devices based on a user indication. In addition, the second electronic device 1 may also send a corresponding input event to the first electronic device based on the input event received by the peripheral. Therefore, the first electronic device is controlled by using the peripheral of the second electronic device 1.

The following still uses the example in which the first electronic device invokes the peripheral of the second electronic device 1, to describe in detail a peripheral use process in a cross-device peripheral invocation process.

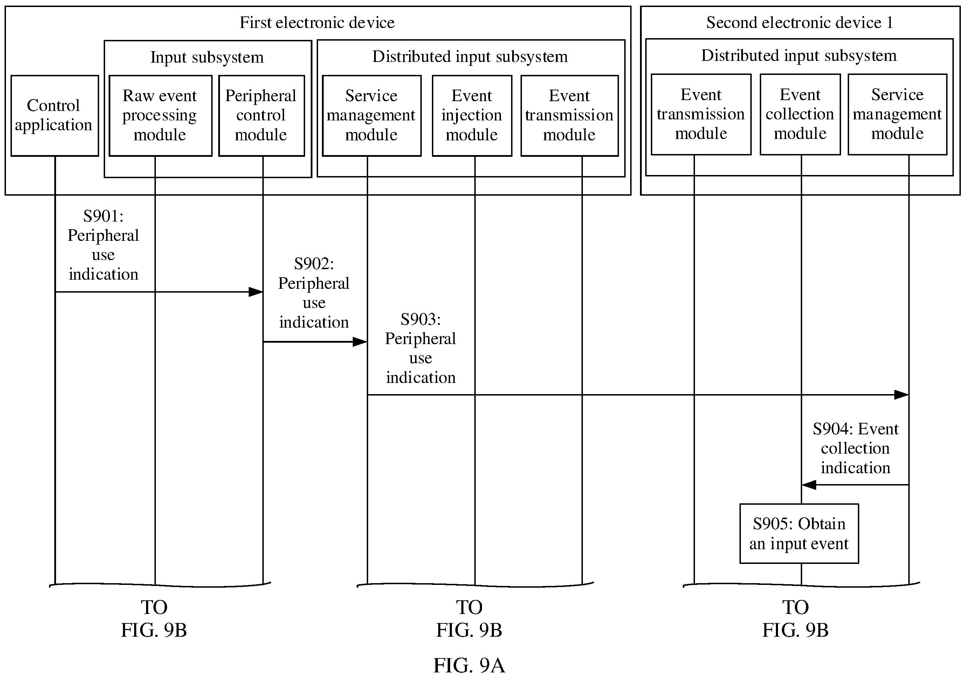

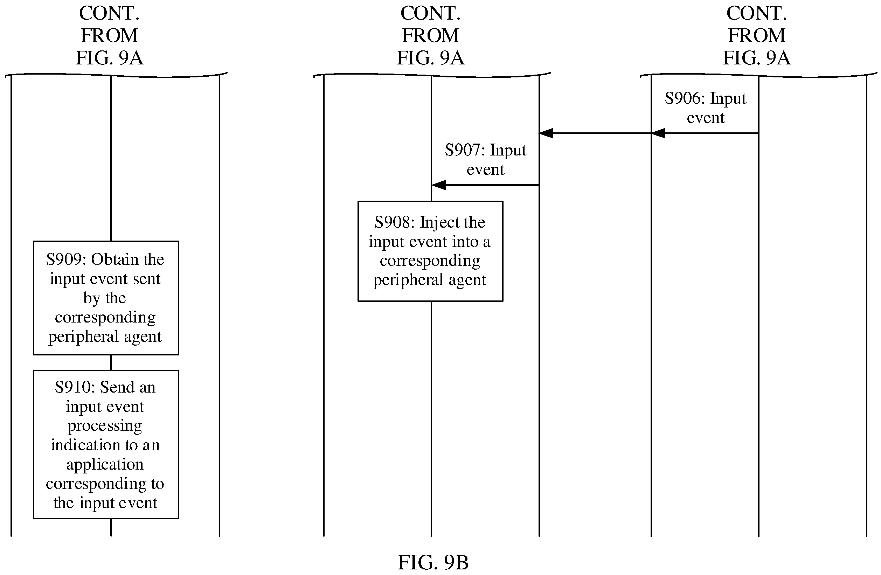

For example, FIG. 9A and FIG. 9B are a schematic flowchart of still another peripheral control method according to an embodiment of this application. As shown in FIG. 9A and FIG. 9B, the method includes the following steps.

S901: A control application in the first electronic device sends a peripheral use indication to a peripheral control module in the first electronic device.

In some embodiments, in response to a user operation, the control application in the first electronic device sends the peripheral use indication to the peripheral control module in an input subsystem, to invoke a corresponding peripheral by using the peripheral control module. Optionally, the peripheral use indication carries a corresponding peripheral identifier or electronic device identifier, which indicates a corresponding peripheral or electronic device.

For example, in the scenario shown in FIG. 1, the control application is a computer manager application. After receiving, by using the computer manager application, a peripheral use indication sent by the laptop computer 101, the first electronic device (for example, the tablet computer 102) determines that a peripheral agent corresponding to the laptop computer 101 exists locally, or creates a peripheral agent of the laptop computer 101. Then, the computer manager application in the first electronic device forwards the peripheral use indication to the peripheral control module, and the peripheral use indication indicates to use a peripheral and the peripheral agent that correspond to the laptop computer 101.

For another example, in the scenario shown in FIG. 7A(a) to FIG. 7A(c), the control application is the Super terminal application. The first electronic device (the tablet computer) finds a computer keyboard and mouse by using the Super terminal application. As shown in FIG. 7A(b), after detecting, by using the Super terminal application, an operation that a user moves a computer keyboard and mouse icon to collide with a first electronic device icon (a tablet computer icon), the first electronic device determines that the user indicates to use a peripheral of a computer. Then, the Super terminal application sends the peripheral use indication to the peripheral control module, and the peripheral use indication indicates to use the peripheral and a peripheral agent that correspond to the computer.

S902: The peripheral control module in the first electronic device sends the peripheral use indication to a service management module in the first electronic device.

S903: The service management module in the first electronic device sends the peripheral use indication to the second electronic device 1.

In some embodiments, in step S902 and step S903, after receiving the peripheral use indication, the peripheral control module determines the corresponding peripheral based on the peripheral identifier carried in the peripheral use indication. Then, the peripheral control module sends, by using the service management module, the peripheral use indication to the electronic device (for example, the second electronic device 1) corresponding to the determined peripheral.

S904: A service management module in the second electronic device 1 sends an event collection indication to an event collection module in the second electronic device 1.

In some embodiments, after receiving the peripheral use indication, the second electronic device 1 sends the event collection indication to the event collection module by using the service management module, and the event collection indication indicates the event collection module to obtain a user operation received by a local peripheral.

It should be noted that, in some scenarios, the peripheral use process may alternatively directly include the thread initialization process shown in FIG. 8A to FIG. 8D. After an event collection thread and an event transmission thread are initialized, the second electronic device 1 may determine to start to obtain an input event by using the event collection module. In other words, step S901 to step S903 are optional steps, or the peripheral initialization indication sent by the control application in step S803 may be used as the peripheral use indication.

S905: The event collection module in the second electronic device 1 obtains the input event.

In some embodiments, the second electronic device 1 collects a user operation by using the peripheral of the second electronic device 1, and sends, to the event collection module, information corresponding to the user operation collected by the peripheral. The event collection module determines the input event based on the obtained information.

For example, as shown in FIG. 6A to FIG. 6C, peripherals of the second electronic device 1 include the keyboard 2 and the mouse 2, and the user may operate the first electronic device by using the keyboard 2 and the mouse 2. The event collection module 643 in the distributed input subsystem 64 of the second electronic device 1 may obtain an input event that is input by the user and that is detected by the keyboard 2 and the mouse 2.

S906: The event collection module in the second electronic device 1 sends the input event to the first electronic device by using an event transmission module in the second electronic device 1.

In some embodiments, after obtaining the input event, the event collection module in the second electronic device 1 sends the input event to the first electronic device by using the event transmission module, to implement cross-device transmission of the input event, so as to implement cross-device control of the peripheral.

For example, as shown in FIG. 6A to FIG. 6C, the event transmission module 646 in the distributed input subsystem 64 of the second electronic device 1 obtains the input event sent by the event collection module 643. The event transmission module 646 sends the obtained input event to the event transmission module 626 in the distributed input subsystem 62 of the first electronic device to which the communication connection is established.

S907: An event injection module in the first electronic device receives, by using an event transmission module in the first electronic device, an input event sent by the second electronic device 1.

S908: The event injection module in the first electronic device injects the input event into a corresponding peripheral agent.

In some embodiments, in step S907 and step S908, after obtaining the input event by using the event transmission module, the first electronic device injects the input event into the corresponding peripheral agent by using the event injection module, so that the input event takes effect locally.

For example, as shown in FIG. 6A to FIG. 6C, after obtaining the input event, the event transmission module 626 in the distributed input subsystem 62 of the first electronic device sends the input event to the event injection module 625. Then, the event injection module 625 sends the received input event to the peripheral agent, like the keyboard 2 agent or the mouse 2 agent, corresponding to the input event at the kernel layer.

S909: A raw event processing module in the first electronic device obtains the input event sent by the corresponding peripheral agent.

In some embodiments, after obtaining the input event, the peripheral agent of the first electronic device sends the input event to the input subsystem, and identifies an original input event by using the input subsystem, to perform a corresponding operation.

For example, as shown in FIG. 6A to FIG. 6C, the peripheral agent at the kernel layer of the first electronic device sends the received input event to a raw event processing module 612 in the input subsystem 61 at the application framework layer. Correspondingly, the raw event processing module 612 performs original event identification processing based on the received input event, and determines the operation indicated by the input event.

In this way, the first electronic device reuses an existing logical framework of an input event software processing process to a maximum extent, that is, the input event is uploaded by using the peripheral agent at the kernel layer to the raw event processing module at the application framework layer, then the raw event processing module completes identification and distribution of the input event, and an application at the application layer performs the corresponding operation. In this way, a requirement of the user for cross-device peripheral invocation is met, and system development difficulty is reduced.

In some other embodiments, after obtaining the input event sent by the second electronic device 1, the event transmission module in the first electronic device may alternatively directly send the input event to the raw event processing module, to complete identification and distribution of the input event. In this way, input event processing efficiency is improved.

S910: The raw event processing module in the first electronic device sends an input event processing indication to the application corresponding to the input event.

In some embodiments, after determining an indication operation of the input event by using the input subsystem, the first electronic device sends the event processing indication to the corresponding application, to implement use of a peripheral of a remote input device (for example, the second electronic device 1).

For example, as shown in FIG. 6A to FIG. 6C, the raw event processing module 612 in the input subsystem 61 of the first electronic device sends the event processing indication to the corresponding application at the application layer.

For example, the input event is an event generated after the user taps "A" on a keyboard. The raw event processing module 612 determines that a window in which a current input focus is located is a window of a document application, and may send the input event to the document application, to indicate the document application to process the input event. Correspondingly, after receiving the input event, the document application identifies input content (for example, "A"), and displays the input content at an input focus location.

For another example, the input event is an event generated after the user taps "Ctrl+P" on the keyboard. After receiving the input event, the raw event processing module 612 identifies an original event according to a preset rule, and determines that the input event is used to start a printer application. In this case, the raw event processing module 612 may indicate to start the printer application, send the input event to the printer application, and indicate the printer application to process the input event. Correspondingly, after the printer application is started, based on the obtained original input event, printed content is determined and printed.

In this way, the first electronic device no longer depends on specific hardware or software, and may directly obtain, by using the distributed input subsystem at the application framework layer of the first electronic device, the input event sent, by using the distributed input subsystem at the application framework layer of the second electronic device, by the second electronic device configured with the peripheral.

However, in the conventional technology, the second electronic device needs to identify and distribute, at the application framework layer of the second electronic device, to the application layer of the second electronic device, the input event collected by the peripheral of the second electronic device, and then send the input event to the application layer of the first electronic device from the application layer of the second electronic device. Then, the first electronic device further needs to send, to the application framework layer of the first electronic device, the input event obtained from the application layer of the first electronic device, and then identifies and distributes, at the application framework layer of the first electronic device, the input event to the corresponding application at the application layer of the first electronic device.

According to the peripheral control method provided in this application, time for obtaining and processing the input event by the first electronic device is effectively reduced, and cross-device peripheral invocation with low system-level latency is implemented.

In addition, due to low-latency cross-device peripheral invocation, impact of another process on input event transmission and processing can also be reduced, to ensure stability of cross-device peripheral invocation.

Further, the cross-device peripheral invocation does not depend on specific hardware or software, the first electronic device can invoke a peripheral of one or more second electronic devices by creating a global peripheral agent.

In some scenarios, a keyboard key combination input function is generally configured in the electronic device, and the user can continuously operate a plurality of input keys on a keyboard, to implement a key combination input. Then, the electronic device may quickly perform a corresponding operation, to reduce operation difficulty of the user. For example, a combination of "Win+L" is a lock screen key, and is used to implement a quick lock screen function; a combination of "Fn+F2" is a volume key, and is used to implement a volume adjustment function of the electronic device; a combination of "Ctrl+C" may implement a copying function; and a combination of "Ctrl+V" may implement a pasting function.

Generally, in a cross-device peripheral control process of the electronic device, different key combination functions are implemented in an electronic device corresponding to a location of an input focus of a mouse, that is, a keyboard key combination is fully transmitted directly, which does not meet a user expectation and affects user experience.

For example, in the scenario shown in FIG. 1, in a process of working on the laptop computer 101, the user needs to use the tablet computer 102 to query data, and the user operates the tablet computer 102 by using a keyboard and mouse of the laptop computer 101. As shown in (b) in FIG. 1, in a process in which the tablet computer 102 displays the cursor 11 of the mouse, after the laptop computer 101 detects that the user performs a key combination operation on the keyboard of the laptop computer 101, the laptop computer 101 also sends a corresponding input event to the electronic device (the tablet computer 102) in which the input focus is located for processing. In this case, if the laptop computer 101 detects an operation of tapping, by the user, the key combination "Fn+F2" on the laptop computer 101, the laptop computer 101 may send a key combination event to the tablet computer 102, and the tablet computer 102 adjusts volume in response to the key combination event. However, in a current example scenario, the user generally needs to indicate the laptop computer 101 to adjust volume, instead of indicating, to adjust volume, the tablet computer 102 controlled by a peripheral.

Therefore, in this case, the user cannot simply control, by using a key combination, volume of a device to which a peripheral belongs. The user may need to switch the input focus of the mouse to the device to which the peripheral belongs, and then the user can use the key combination to control the device to which the peripheral belongs, resulting in cumbersome operations for the user.

Therefore, an embodiment of this application provides a peripheral control method. In the method, a trustlist is preset in an electronic device. After detecting a key combination operation, the electronic device determines whether the key combination operation is a key combination operation in the trustlist, to determine whether the key combination operation takes effect at a local end or at a peer end. In this way, the key combination is more suitable for a cross-device peripheral control scenario. This meets a use requirement of the user, reduces operation difficulty of the user, and improves user experience.

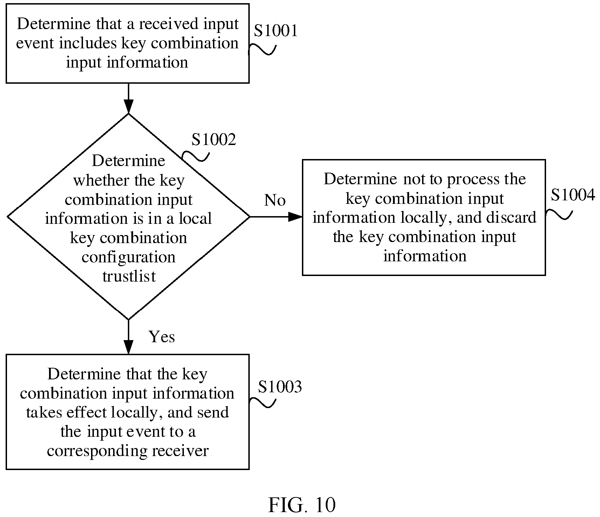

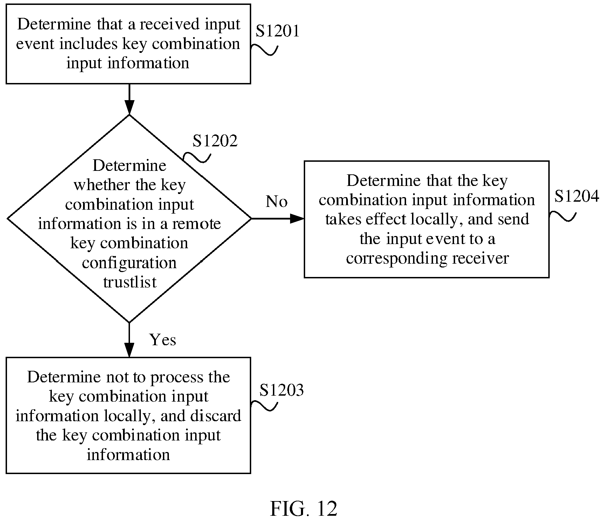

The following still uses the example in which the first electronic device invokes the peripheral of the second electronic device 1, to describe in detail, based on method procedures shown in FIG. 10 and FIG. 12, a key combination use process in a cross-device peripheral invocation process.

For example, FIG. 10 is a schematic flowchart of yet another peripheral control method according to an embodiment of this application. As shown in FIG. 10, the method is applied to the second electronic device 1, and the method includes the following steps.

S1001: The second electronic device 1 determines that a received input event includes key combination input information.

In some embodiments, a key combination configuration management module is configured in the second electronic device 1, and is configured to manage a key combination configuration trustlist. Optionally, some key combination operations are more suitable for taking effect locally, for example, a lock screen key obtained by combining "Win+L", and a volume key obtained by combining "Fn+F2". Some key combination operations are more suitable for taking effect remotely, for example, a copying key obtained by combining "Ctrl+C" and a pasting key obtained by combining "Ctrl+V". In this way, key combination configuration trustlists corresponding to electronic devices of different roles may be created.

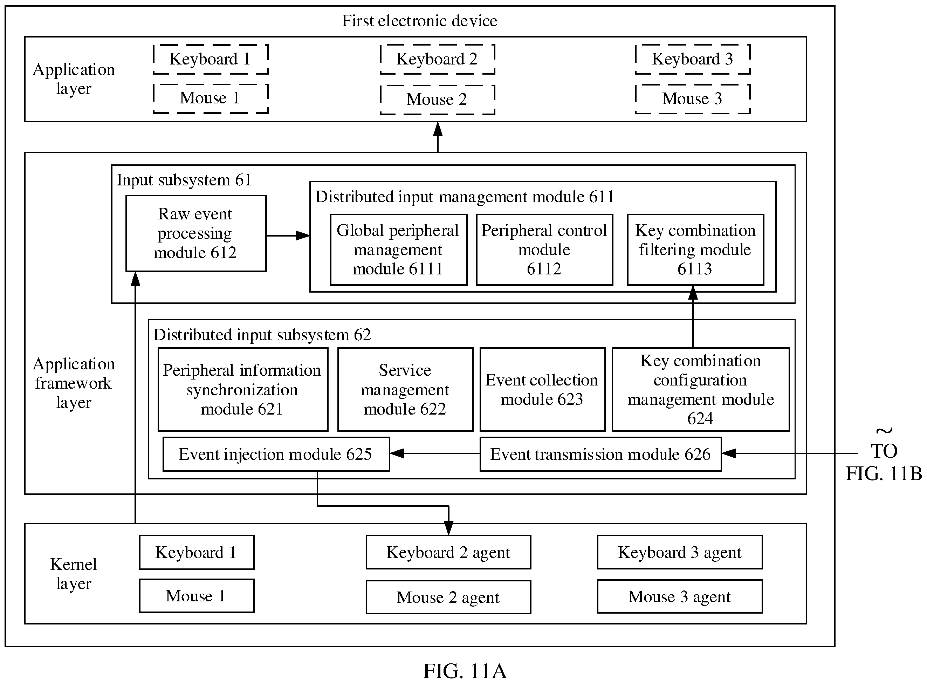

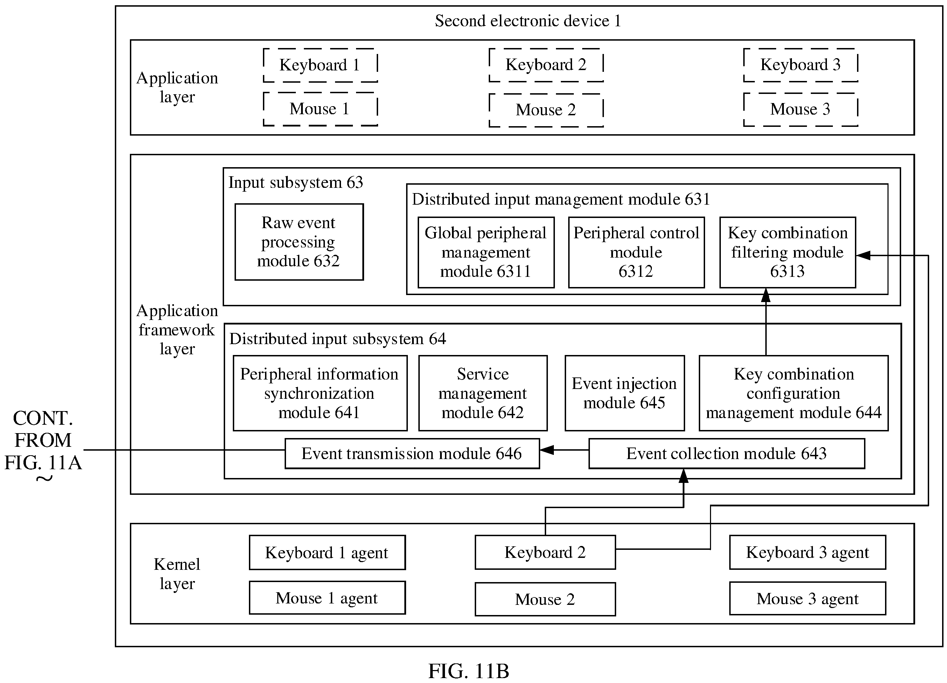

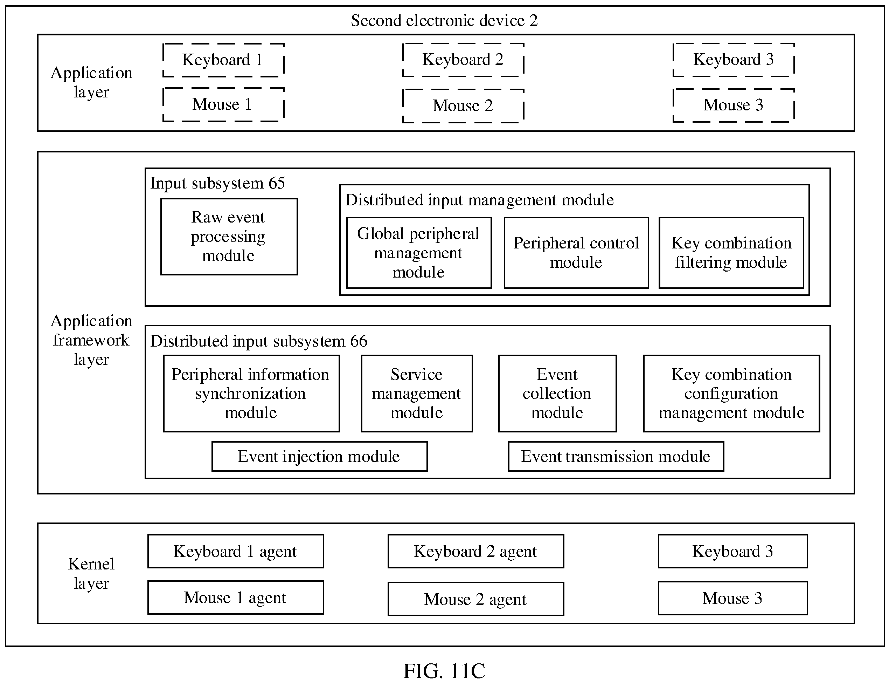

For example, as shown in FIG. 11A to FIG. 11C, in the procedures shown in FIG. 8A to FIG. 8D and FIG. 9A and FIG. 9B, the first electronic device implements cross-device invocation of a peripheral (for example, a keyboard 2) of the second electronic device 1. The distributed input subsystem 64 at an application framework layer of the second electronic device 1 further includes a key combination configuration management module 644, configured to manage a key combination configuration trustlist in the distributed system. For example, the key combination configuration management module 644 stores a key combination configuration trustlist that takes effect locally and a key combination configuration trustlist corresponding to one or more remote devices (such as the first electronic device).

Optionally, in the foregoing process of synchronizing peripheral information (for example, synchronizing the peripheral information by using peripheral information synchronization module), electronic devices may also synchronize the key combination configuration trustlists of the electronic devices. For a synchronization manner of the key combination configuration trustlists, refer to the peripheral information synchronization process. Details are not described herein again. Therefore, each electronic device in a distributed communication system may store same key combination configuration trustlists, for example, including the key combination configuration trustlist that takes effect locally and the key combination configuration trustlist corresponding to one or more remote devices.

In some embodiments, a key combination configuration trustlist stored in the second electronic device 1 may be a trustlist preset by a vendor. Optionally, when detecting an operation of setting a key combination by a user, the electronic device may correspondingly update a corresponding key combination configuration trustlist. In this way, the key combination trustlist better meets a user requirement.

In some embodiments, a key combination filtering module is further configured in the electronic device, and is configured to filter out the input event that includes the key combination input information. The key combination filtering module is further configured to determine, based on the local key combination configuration trustlist, whether a key combination operation takes effect locally.

For example, as shown in FIG. 11A to FIG. 11C, an input subsystem 63 at the application framework layer of the second electronic device 1 further includes a key combination filtering module 6313, configured to receive an input event detected by the keyboard 2, to determine whether the input event includes the key combination input information. If the key combination input information is included, the key combination input information is filtered out by performing the following step S1002.

S1002: The second electronic device 1 determines whether the key combination input information is in the local key combination configuration trustlist; and if yes, performs step S1003; or if not, performs step S1004.

S1003: The second electronic device 1 determines that the key combination input information takes effect locally, and sends the input event to a corresponding receiver.

S1004: The second electronic device 1 determines not to process the key combination input information locally, and discards the key combination input information.

In some embodiments, in step S1002 to step S1004, after detecting the input event input by the local peripheral, the second electronic device 1 identifies that the input event is a key combination input event by using the input subsystem, and may first determine, based on the local key combination configuration trustlist, whether the current key combination input information is in the local key combination configuration trustlist. If the key combination input information is in the local key combination configuration trustlist, it is determined to perform an operation correspondingly indicated by the detected key combination. If the key combination input information is not in the local key combination configuration trustlist, it is determined to discard the key combination input information, and no longer perform an operation correspondingly indicated by the detected key combination.

For example, as shown in FIG. 11A to FIG. 11C, the keyboard 2 of the second electronic device 1 sends the detected input event to the key combination filtering module 6313. The key combination filtering module 6313 determines that the input event is a key combination input event generated after the user continuously operates on the local keyboard, and includes the key combination input information, and requests the key combination configuration management module 644 in the distributed input subsystem 64 to obtain the local key combination configuration trustlist. Then, the key combination filtering module 6313 determines, based on the local key combination configuration trustlist, whether the currently received key combination input information is in the local key combination configuration trustlist. If the key combination filtering module 6313 determines that the key combination input information is in the local key combination trustlist, the key combination filtering module 6313 may determine that the key combination input information takes effect locally, and send the input event to the corresponding receiver (for example, to an application layer). For example, if the key combination is "Win+L", the key combination filtering module 6313 may send an input event to a functional module configured to lock a screen locally, to lock a screen of the second electronic device 1. If the key combination filtering module 6313 determines that the key combination input information is not in the local key combination trustlist, the second electronic device 1 may determine not to process the key combination input information locally, and may discard the key combination input information.

For example, FIG. 12 is a schematic flowchart 1 of yet still another peripheral control method according to an embodiment of this application. As shown in FIG. 12, the method is applied to the first electronic device, and the method includes the following steps.

S1201: The first electronic device determines that a received input event includes key combination input information.

In some embodiments, a key combination configuration management module is configured in the first electronic device, and is configured to manage a key combination configuration trustlist. Similarly, the key combination configuration trustlist includes a local key combination configuration trustlist and a remote key combination configuration trustlist (for example, a key combination configuration trustlist of the second electronic device).

In some embodiments, after obtaining an input event sent by a remote electronic device, an input subsystem of the first electronic device determines whether the received input event includes the key combination input information. If the key combination input information is included, the key combination input information is filtered out by performing the following step S1202.

For example, as shown in FIG. 11A to FIG. 11C, in the procedures shown in FIG. 8A to FIG. 8D and FIG. 9A and FIG. 9B, the first electronic device implements cross-device invocation of a peripheral (for example, a keyboard 2) of the second electronic device 1. After receiving the input event sent by a peripheral agent at a kernel layer, the raw event processing module 612 in the input subsystem 61 of the first electronic device may further send the input event to a key combination filtering module 6113 in the distributed input management module 611, and determine, by using the key combination filtering module 6113, whether the received input event includes the key combination input information.

Optionally, for remaining content in step S1201, refer to related content in step S1001. Details are not described herein again.

S1202: The first electronic device determines whether the key combination input information is in the remote key combination configuration trustlist; and if yes, performs step S1203; or if not, performs step S1204.

S1203: The first electronic device determines not to process the key combination input information locally, and discards the key combination input information.

S1204: The first electronic device determines that the key combination input information takes effect locally, and sends the input event to a corresponding receiver.

In some embodiments, in step S1202 to step S1204, after obtaining the input event sent by a remote device, the first electronic device identifies that the input event is a key combination input event by using the input subsystem, and may first determine, based on the remote key combination configuration trustlist, whether the current key combination input information is in the remote key combination configuration trustlist. If the key combination input information is in the remote key combination configuration trustlist, it is determined to discard the key combination input information, and no longer perform an indication operation corresponding to a key combination in the received input event. If the key combination input information is not in the remote key combination configuration trustlist, it is determined to perform an indication operation corresponding to a key combination in the obtained input event. Optionally, if the key combination input information is not in the remote key combination configuration trustlist, it may be further determined whether the key combination input information is in the local key combination configuration trustlist, to determine a specific operation indicated by a user.

For example, as shown in FIG. 11A to FIG. 11C, the key combination filtering module 6113 in the distributed input management module 611 in the input subsystem of the first electronic device obtains the input event sent by the remote device that is forwarded by the raw event processing module 612, determines that the input event is a key combination input event generated after the user continuously operates on a remote keyboard, and includes the key combination input information, and requests a key combination configuration management module 624 in the distributed input subsystem 62 to obtain a corresponding remote key combination configuration trustlist. Then, the key combination filtering module 6113 determines, based on the remote key combination configuration trustlist, whether the currently received key combination input information is in the remote key combination configuration trustlist. If the key combination filtering module 6113 determines that the key combination input information is in the remote key combination trustlist, the first electronic device may determine not to process the key combination input information locally, and may discard the key combination input information. If the key combination filtering module 6113 determines that the key combination input information is not in the remote key combination trustlist, the key combination filtering module 6113 may determine that the key combination input information takes effect locally, and send the input event to the corresponding receiver (for example, to an application layer). For example, the key combination is "Ctrl+C", and the key combination filtering module 6113 may send the input event to a local functional module configured to implement a copying function, to copy display content on the first electronic device.

It should be noted that, in the example procedures in FIG. 10 and FIG. 12, the keyboard key combination is used to describe a key combination application procedure in a cross-device peripheral invocation process. The key combination not only includes a keyboard key combination, but may also include a plurality of types of inputs of other electronic devices, for example, a special gesture on a touchscreen, or a combination configuration between a keyboard and a mouse. For a related implementation, refer to the procedures shown in FIG. 10 and FIG. 12. Details are not described in embodiments of this application.

In this way, the key combination is more suitable for a cross-device peripheral control scenario. This meets a use requirement of the user, reduces operation difficulty of the user, and improves user experience.

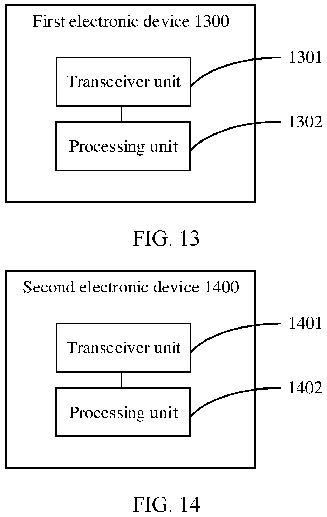

The foregoing describes in detail the peripheral control method provided in embodiments of this application with reference to FIG. 5 to FIG. 12. The following describes in detail a first electronic device and a second electronic device provided in embodiments of this application with reference to FIG. 13 and FIG. 14.

In a possible design, FIG. 13 is a diagram of a structure of a first electronic device according to an embodiment of this application. As shown in FIG. 13, the first electronic device 1300 includes a transceiver unit 1301 and a processing unit 1302. The first electronic device 1300 may be configured to implement functions of the first electronic device in the foregoing method embodiments.

Optionally, the transceiver unit 1301 is configured to support the first electronic device 1300 in performing S501 in FIG. 5, and/or is configured to support the first electronic device 1300 in performing S801, S805, and S809 in FIG. 8A to FIG. 8D, and/or is configured to support the first electronic device 1300 in performing S903 and S906 in FIG. 9A and FIG. 9B.

Optionally, the processing unit 1302 is configured to support the first electronic device 1300 in performing S502 in FIG. 5, and/or is configured to support the first electronic device 1300 in performing S801 to S804, S806a to S808a, S806b to S808b, and S810 and S811 in FIG. 8A to FIG. 8D, and/or is configured to support the first electronic device 1300 in performing S901, S902, and S907 to S910 in FIG. 9A and FIG. 9B, and/or is configured to support the first electronic device 1300 in performing S1201 to S1203 in FIG. 12.

The transceiver unit may include a receiving unit and a sending unit, may be implemented by a transceiver or a transceiver-related circuit component, and may be a transceiver or a transceiver module. Operations and/or functions of the units in the first electronic device 1300 are separately intended to implement corresponding procedures of the peripheral control method in the foregoing method embodiments. All related content of the steps in the foregoing method embodiments may be cited in function descriptions of the corresponding functional units. For brevity, details are not described herein again.

Optionally, the first electronic device 1300 shown in FIG. 13 may further include a storage unit (not shown in FIG. 13), and the storage unit stores a program or instructions. When the transceiver unit 1301 and the processing unit 1302 execute the program or the instructions, the first electronic device 1300 shown in FIG. 13 can perform the peripheral control method in the foregoing method embodiments.

For technical effects of the first electronic device 1300 shown in FIG. 13, refer to technical effects of the peripheral control method in the foregoing method embodiments. Details are not described herein again.

In addition to a form of the first electronic device 1300, the technical solutions provided in this application may also be a functional unit or a chip in the first electronic device, or an apparatus that matches with the first electronic device for use.

In a possible design, FIG. 14 is a diagram of a structure of a second electronic device according to an embodiment of this application. As shown in FIG. 14, the second electronic device 1400 includes a transceiver unit 1401 and a processing unit 1402. The second electronic device 1400 may be configured to implement functions of the second electronic device in the foregoing method embodiments.

Optionally, the transceiver unit 1401 is configured to support the second electronic device 1400 in performing S805 and S809 in FIG. 8A to FIG. 8D, and/or is configured to support the second electronic device 1400 in performing S903, S905, and S906 in FIG. 9A and FIG. 9B.

Optionally, the processing unit 1402 is configured to support the second electronic device 1400 in performing S806c to S808c and S806d to S808d in FIG. 8A to FIG. 8D; and/or is configured to support the second electronic device 1400 in performing S904 in FIG. 9A and FIG. 9B; and/or is configured to support the second electronic device 1400 in performing S1001 to S 1003 in FIG. 10.

The transceiver unit may include a receiving unit and a sending unit, may be implemented by a transceiver or a transceiver-related circuit component, and may be a transceiver or a transceiver module. Operations and/or functions of the units in the second electronic device 1400 are separately intended to implement corresponding procedures of the peripheral control method in the foregoing method embodiments. All related content of the steps in the foregoing method embodiments may be cited in function descriptions of the corresponding functional units. For brevity, details are not described herein again.

Optionally, the second electronic device 1400 shown in FIG. 14 may further include a storage unit (not shown in FIG. 14), and the storage unit stores a program or instructions. When the transceiver unit 1401 and the processing unit 1402 execute the program or the instructions, the second electronic device 1400 shown in FIG. 14 can perform the peripheral control method in the foregoing method embodiments.

For technical effects of the second electronic device 1400 shown in FIG. 14, refer to technical effects of the peripheral control method in the foregoing method embodiments. Details are not described herein again.

In addition to a form of the second electronic device 1400, the technical solutions provided in this application may also be a functional unit or a chip in the second electronic device, or an apparatus that matches with the second electronic device for use.

An embodiment of this application further provides a chip system, including a processor, where the processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processor unit (central processor unit, CPU), a network processor (network processor, NP), a digital signal processor (digital signal processor, DSP), a microcontroller unit (microcontroller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the peripheral control method in the foregoing embodiments.

An embodiment of this application further provides a computer program product. When the computer program product runs on a computer, the computer is enabled to perform the foregoing related steps, to implement the peripheral control method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is enabled to perform the peripheral control method in the foregoing method embodiments. The apparatus, the computer-readable storage medium, the computer program product, or the chip provided in embodiments of this application are all configured to perform the corresponding method provided above. Therefore, for beneficial effects that can be achieved, refer to beneficial effects in the corresponding method provided above, and details are not described herein again.

Methods or algorithm steps described in combination with the content disclosed in embodiments of this application may be implemented by hardware, or may be implemented by a processor by executing a software instruction. The software instruction may include a corresponding software module. The software module may be stored in a random access memory (random access memory, RAM), a flash memory, a read-only memory (read-only memory, ROM), an erasable programmable read only memory (erasable programmable ROM, EPROM), an electrically erasable programmable read-only memory (electrically EPROM, EEPROM), a register, a hard disk drive, a removable hard disk drive, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

Based on descriptions of the foregoing implementations, a person skilled in the art may clearly understand that, for ease and brevity of description, division of the foregoing functional modules is merely used as an example for description. In actual application, the foregoing functions can be allocated to different modules and implemented as required, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed apparatuses and methods may be implemented in other manners. The described apparatus embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the modules or units may be implemented in an electronic form, a mechanical form, or another form.

In addition, functional units in embodiments of this application may be integrated into one processing unit, each of the units may exist independently physically, or two or more units may be integrated into one unit. The integrated unit may be implemented in a form of hardware, or may be implemented in a form of software functional unit.

The computer-readable storage medium includes but is not limited to any one of the following: any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement in the technical scope disclosed in this application shall fall in the protection scope of this application. Therefore, the protection scope of this application shall be subject to the protection scope of the claims.

## Claims

1. A peripheral control method, wherein the method comprises:
obtaining, by a first electronic device, peripheral information of one or more second electronic devices;
creating, by the first electronic device based on the peripheral information, a peripheral agent corresponding to a peripheral of the one or more second electronic devices;
receiving, by the first electronic device by using a first distributed input subsystem, an input event sent by a second distributed input subsystem of a target second electronic device in the one or more second electronic devices, wherein the input event is an event determined after the target second electronic device collects a user input operation by using a peripheral;
processing, by the first electronic device, the input event by using a target peripheral agent corresponding to the target second electronic device; and
performing, by the first electronic device, a target operation corresponding to the input event.

2. The method according to claim 1, wherein the processing, by the first electronic device, the input event by using a target peripheral agent corresponding to the target second electronic device comprises:
receiving, by the target peripheral agent in the first electronic device, the input event forwarded by the first distributed input subsystem;
sending, by the target peripheral agent in the first electronic device, the input event to a first input subsystem, wherein the first input subsystem is a subsystem that is located at a same layer as the first distributed input subsystem in an operating system of the first electronic device, or the first input subsystem and the first distributed input subsystem are a same subsystem; and
after identifying a first application in which an input focus is located, sending, by the first input subsystem of the first electronic device, the input event to the first application; or
after determining, according to a preset rule, a second application corresponding to the input event, starting, by the first input subsystem of the first electronic device, the second application, and sending the input event to the second application.

3. The method according to claim 1 or 2, wherein the first electronic device stores a first key combination configuration trustlist of the one or more second electronic devices, and the first key combination configuration trustlist indicates whether a received key combination input event takes effect in the one or more second electronic devices.

4. The method according to claim 3, wherein the processing, by the first electronic device, the input event by using a target peripheral agent corresponding to the target second electronic device; and performing, by the first electronic device, a target operation corresponding to the input event comprises:
sending, by the target peripheral agent in the first electronic device, the input event to the first input subsystem;
determining, by the first electronic device by using the first input subsystem, that the input event is a key combination input event;
determining, by the first electronic device by using the first input subsystem, whether key combination input information in the key combination input event is in the first key combination configuration trustlist; and
if the key combination input information is not in the first key combination configuration trustlist, performing, by the first electronic device, the target operation.

5. The method according to claim 3 or 4, wherein the method further comprises:
sending, by the first electronic device, a second key combination configuration trustlist of the first electronic device to the one or more second electronic devices, wherein the second key combination configuration trustlist indicates whether a key combination input event takes effect in the first electronic device.

6. The method according to any one of claims 1 to 5, wherein the obtaining, by a first electronic device, peripheral information of one or more second electronic devices comprises:
obtaining, by the first electronic device, the peripheral information of the one or more second electronic devices from a distributed database;
receiving, by the first electronic device, a broadcast message sent by the one or more second electronic devices, wherein the broadcast message carries the peripheral information;
downloading, by the first electronic device, the peripheral information of the one or more second electronic devices from a cloud server; or
receiving, by the first electronic device, the peripheral information of the one or more second electronic devices that is sent by a central node of a communication system, wherein the communication system comprises the first electronic device and the one or more second electronic devices.

7. The method according to any one of claims 1 to 6, wherein after the creating, by the first electronic device based on the peripheral information, a peripheral agent corresponding to a peripheral of the one or more second electronic devices, the method further comprises:
initializing, by the first electronic device, an event injection thread and an event transmission thread, wherein the event injection thread is configured to inject the received input event into the corresponding peripheral agent, and the event transmission thread is configured to receive the input event.

8. The method according to any one of claims 1 to 7, wherein the method further comprises:
disconnecting, by the first electronic device, a communication connection to the target second electronic device; and
deleting, by the first electronic device, the target peripheral agent.

9. The method according to any one of claims 1 to 8, wherein the creating, by the first electronic device based on the peripheral information, a peripheral agent corresponding to a peripheral of the one or more second electronic devices comprises:
creating, by the first electronic device at a kernel layer based on the peripheral information, the peripheral agent corresponding to the peripheral of the one or more second electronic devices.

10. The method according to any one of claims 1 to 9, wherein the first distributed input subsystem is located at an application framework layer of the first electronic device, and the second distributed input subsystem is located at an application framework layer of the target second electronic device.

11. The method according to any one of claims 1 to 10, wherein the peripheral comprises one or more of a keyboard, a mouse, and a touchpad.

12. A peripheral control method, wherein the method comprises:
obtaining, by a second electronic device, peripheral information of a first electronic device;
creating, by the second electronic device based on the peripheral information, a peripheral agent corresponding to the first electronic device;
determining, by the second electronic device in response to an operation of a user on a peripheral, an input event forwarded to the first electronic device, wherein the input event indicates the first electronic device to perform a target operation; and
sending, by the second electronic device, the input event to a first distributed input subsystem of the first electronic device by using a second distributed input subsystem.

13. The method according to claim 12, wherein the second electronic device stores a first key combination configuration trustlist, and the first key combination configuration trustlist indicates whether a key combination input event takes effect in the second electronic device.

14. The method according to claim 13, wherein the sending, by the second electronic device, the input event to a first distributed input subsystem of the first electronic device by using a second distributed input subsystem comprises:
determining, by a second input subsystem of the second electronic device, that the input event is a key combination input event; and
if the second input subsystem of the second electronic device determines that key combination input information in the key combination input event is not in the first key combination configuration trustlist, sending, by the second electronic device, the input event to the first distributed input subsystem of the first electronic device by using the second distributed input subsystem, wherein the second input subsystem is a subsystem that is located at a same layer as the second distributed input subsystem in an operating system of the second electronic device, or the second input subsystem and the second distributed input subsystem are a same subsystem.

15. The method according to claim 13 or 14, wherein the method further comprises:
sending, by the second electronic device, the first key combination configuration trustlist to the first electronic device.

16. The method according to any one of claims 12 to 15, wherein the obtaining, by a second electronic device, peripheral information of a first electronic device comprises:
obtaining, by the second electronic device, the peripheral information of the first electronic device from a distributed database;
receiving, by the second electronic device, a broadcast message sent by the first electronic device, wherein the broadcast message carries the peripheral information;
downloading, by the second electronic device, the peripheral information of the first electronic device from a cloud server; or
receiving, by the second electronic device, the peripheral information of the first electronic device that is sent by a central node of a communication system.

17. The method according to any one of claims 12 to 16, wherein after the creating, by the second electronic device based on the peripheral information, a peripheral agent corresponding to the first electronic device, the method further comprises:
initializing, by the second electronic device, an event collection thread and an event transmission thread, wherein the event collection thread is configured to collect the input event by using the peripheral, and the event transmission thread is configured to send the input event.

18. The method according to any one of claims 12 to 17, wherein the method further comprises:
disconnecting, by the second electronic device, a communication connection to the first electronic device; and
deleting, by the second electronic device, the peripheral agent corresponding to the first electronic device.

19. The method according to any one of claims 12 to 18, wherein the first distributed input subsystem is located at an application framework layer of the first electronic device, and the second distributed input subsystem is located at an application framework layer of a target second electronic device.

20. The method according to any one of claims 12 to 19, wherein the peripheral comprises one or more of a keyboard, a mouse, and a touchpad.

21. An electronic device, wherein the electronic device is a first electronic device and comprises a processor and a memory, the memory is coupled to the processor, the memory is configured to store computer-readable instructions, and when the processor reads the computer-readable instructions from the memory, the electronic device is enabled to perform the method according to any one of claims 1 to 11.

22. An electronic device, wherein the electronic device is a second electronic device and comprises a processor, a memory, and a peripheral, the memory is coupled to the processor, the memory is configured to store computer-readable instructions, and when the processor reads the computer-readable instructions from the memory, the electronic device is enabled to perform the method according to any one of claims 12 to 20.

23. The electronic device according to claim 22, wherein the peripheral comprises one or more of a keyboard, a mouse, and a touchpad.

24. A peripheral control system, wherein the system comprises a first electronic device and one or more second electronic devices, the first electronic device is configured to perform the method according to any one of claims 1 to 11, and the one or more second electronic devices are configured to perform the method according to any one of claims 12 to 20.

25. A computer-readable storage medium, wherein the computer-readable storage medium comprises a computer program, and when the computer program is run on an electronic device, the electronic device is enabled to perform the method according to any one of claims 1 to 11, or the electronic device is enabled to perform the method according to any one of claims 12 to 20.

26. A computer program product, wherein when the computer program product runs on a computer, the computer is enabled to perform the method according to any one of claims 1 to 11, or the computer is enabled to perform the method according to any one of claims 12 to 20.

27. A chip system, wherein the chip system comprises at least one processor and at least one interface circuit, the at least one interface circuit is configured to: perform a receiving and sending function, and send instructions to the at least one processor, and when the at least one processor executes the instructions, the at least one processor performs the method according to any one of claims 1 to 11, or the at least one processor performs the method according to any one of claims 12 to 20.
